(19) **Europäisches Patentamt**

**European Patent Office**

**Office européen des brevets**

(11) **EP 0 936 520 B1**

(12) **EUROPEAN PATENT SPECIFICATION**

(45) Date of publication and mention
of the grant of the patent:
**19.06.2002 Bulletin 2002/25**

(51) Int Cl.⁷: **G05D 1/00**, G05D 1/02,
G01S 5/14, G01C 21/16

(21) Application number: **99106274.6**

(22) Date of filing: **10.12.1990**

(54) **Integrated vehicle positioning and navigation system, apparatus and method**

Integriertes Fahrzeugpositionier- und -navigationssystem, dessen Vorrichtung und Verfahren

Procédé, appareil et système de navigation et de positionnement intégrés pour véhicules

(84) Designated Contracting States:
**DE FR GB SE**

(30) Priority: **11.12.1989 WOPCT/US89/05580**

(43) Date of publication of application:
**18.08.1999 Bulletin 1999/33**

(62) Document number(s) of the earlier application(s) in
accordance with Art. 76 EPC:
**95110798.6 / 0 679 974**
**91902277.2 / 0 507 845**

(73) Proprietor: **CATERPILLAR INC.**
**Peoria Illinois 61629-6490 (US)**

(72) Inventors:
 • **Kyrtsos, Christos T.**
   **Peoria, Illinois 61615 (US)**
 • **Gudat, Adam J.**
   **Edelstein, Illinois 61516 (US)**
 • **Christensen, Dana A.**
   **Snarestone, Derby, DE12 7DB (GB)**
 • **Friedrich, Douglas W.**
   **Pekin, Illinois 61554 (US)**
 • **Stafford, Darrell E.**
   **Grants Pass, Oregon 97527 (US)**
 • **Sennott, James W.**
   **Bloomington, Illinois 61701 (US)**
 • **Bradbury, Walter J.**
   **Dunlap, Illinois 61525 (US)**
 • **Clow, Richard G.**
   **Phoenix, Arizona 85027 (US)**
 • **Devier, Lonnie J.**
   **Tarumi KU 665 0872Ivania 15213 (JP)**
 • **Kemner, Carl A.**
   **Peoria Heights, Illinois 61614 (US)**
 • **Kleimenhagen, Karl W.**
   **Peoria, Illinois 61614 (US)**
 • **Koehrsen, Craig L.**
   **Bridgeman Downs, Queensland 4035 (AU)**
 • **Lay, Norman K.**
   **Peoria, Illinois 61615 (US)**
 • **Peterson, Joel L.**
   **Peoria, Illinois 61615 (US)**
 • **Rao, Prithvi N.**
   **Pittsburh, Illinois 15206 (US)**
 • **Schmidt, Larry E.**
   **Chillicothe, Illinois 61523 (US)**
 • **Shaffer, Gary K.**
   **Butler, Pennsylvania 16001 (US)**
 • **Shi, WenFan**
   **Pittsburgh, Pennsylvania 15213 (US)**
 • **Shin, Dong Hun**
   **Guro-gu, Guro 1, Don S , Seoul (KR)**
 • **Singh, Sanjiv J.**
   **Pittsburgh, Pennsylvania 15217 (US)**
 • **Weinbeck, Louis J.**
   **Livingston, Texas 77399-1036 (US)**
 • **West, Jay H.**
   **Junction City, Kansas 66441 (US)**
 • **Whittaker, William L.**
   **Pittsburgh, Pennsylvania 15207 (US)**
 • **Wu, BaoXin (NMI)**
   **Pittsburgh, Pennsylvania 15213 (US)**

(74) Representative: **Haley, Stephen**
**Gill Jennings & Every,**
**Broadgate House,**
**7 Eldon Street**
**London EC2M 7LH (GB)**

(56) References cited:
**WO-A-87/07056**

• **C. ISIK ET AL.: "Pilot Level of a Hierarchical**
**Controller for an Unmanned Mobile Robot" IEEE**
**JOURNAL OF ROBOTICS AND AUTOMATION ,**
**vol. 4, no. 3, June 1988, pages 241 -255,**
**XP002106462 New York US**

**Description**

Background of the Invention

1. Field of the Invention

The present invention relates to positioning systems, and more particularly, to a positioning system and method for determining the terrestrial position of an autonomous vehicle on or near the planet Earth's surface.

2. Related Art

Several national governments, including the United States (U.S.) of America, are presently developing a terrestrial position determination system, referred to generically as a global positioning system (GPS). In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined.

The U.S. government has designated its GPS the "NAVSTAR." The NAVSTAR GPS will be declared operational by the U.S. government in 1993. Moreover, the government of the Union of Soviet Socialist Republics (U.S.S. R.) is currently developing a GPS known as "GLONASS," which is substantially similar to the NAVSTAR GPS.

In the NAVSTAR GPS, it is envisioned that four orbiting GPS satellites will exist in each of six separate orbits. A total of 24 GPS satellites will be in orbit at any given time with 21 GPS satellites in operation and 3 GPS satellites serving as spares. The three GPS satellite orbits will have mutually orthogonal planes relative to the Earth. The GPS satellite orbits will be neither polar orbits nor equatorial orbits. Moreover, the GPS satellites will orbit the Earth once every 12 hours.

Using the NAVSTAR GPS, the relative position of orbiting GPS satellites with respect to any Earth receiver can be determined from the electromagnetic signals. The relative position is commonly referred to as a "pseudorange." Moreover, the relative position can be calculated by two methods.

One method is to measure the propagation time delays between transmission and reception of the emanating electromagnetic signals. In the NAVSTAR GPS, the electromagnetic signals are encoded continuously with the time at which the signals are transmitted from the GPS satellites. Needless to say, one can make note of the reception time and subtract the encoded transmission time in order to derive time delays. From the calculated time delays and from knowing the speed at which electromagnetic waves travel through the atmosphere, pseudoranges can be accurately derived. Pseudoranges computed using the foregoing method are referred to in the context of this document as "actual" pseudoranges.

Another method involves satellite position data that is encoded in the electromagnetic signals being transmitted from the orbiting satellites. Almanac data relating to the satellite position data of the NAVSTAR GPS is publicly available. Reference to this almanac data in regard to data encoded in the electromagnetic signals allows for an accurate derivation of pseudoranges. Pseudoranges computed using the foregoing method are referred to in the context of this document as "estimated" pseudoranges.

However, with respect to the previous method of deriving estimated pseudoranges, it should be noted that the satellite position data is updated at the GPS satellite only once an hour on the hour. Consequently, an estimated pseudorange decreases in accuracy over time after each hour until the next hour, when a new estimated pseudorange is computed using updated satellite position data.

Furthermore, by knowing the relative position of at least three of the orbiting GPS satellites, the absolute terrestrial position (that is, longitude, latitude, and altitude with respect to the Earth's center) of any Earth receiver can be computed via simple geometric theory involving triangulation methods. The accuracy of the terrestrial position estimate depends in part on the number of orbiting GPS satellites that are sampled. Using more GPS satellites in the computation can increase the accuracy of the terrestrial position estimate.

Conventionally, four GPS satellites are sampled to determine each terrestrial position estimate because of errors contributed by circuit clock differentials among the Earth receiver and the various GPS satellites. Clock differentials could be several milliseconds. If the Earth receiver's clock were synchronized with that of the GPS satellites, then only three GPS satellites would need to be sampled to pinpoint the location of the Earth receiver.

In the NAVSTAR GPS, electromagnetic signals are continuously transmitted from all of the GPS satellites at a single carrier frequency. However, each of the GPS satellites has a different modulation scheme, thereby allowing for differentiation of the signals. In the NAVSTAR GPS, the carrier frequency is modulated using a pseudorandom signal which is unique to each GPS satellite.- Consequently, the orbiting GPS satellites in the NAVSTAR GPS can be identified when the carrier frequencies are demodulated.

Furthermore, the NAVSTAR GPS envisions two modes of modulating the carrier wave using pseudorandom number (PRN) signals. In one mode, referred to as the "coarse/acquisition" (C/A) mode, the PRN signal is a gold code sequence having a chip rate of 1.023 MHz. The gold code sequence is a well-known conventional pseudorandom sequence in the art. A chip is one individual pulse of the pseudorandom code. The chip rate of a pseudorandom code sequence is the rate at which the chips in the sequence are generated. Consequently, the chip rate is equal to the code repetition rate divided by the number of members in the code. Accordingly, with respect to the coarse/acquisition mode of the NAVSTAR GPS, there exists 1,023 chips in each gold code sequence and the sequence is repeated once every millisecond. Use of the 1.023 MHz gold code sequence from four orbiting GPS satellites enables the terrestrial position of an Earth receiver to be determined to an approximate accuracy of within 60 to 300 meters.

The second mode of modulation in the NAVSTAR GPS is commonly referred to as the "precise" or "protected" (P) mode. In the P mode, the pseudorandom code has a chip rate of 10.23 MHz. Moreover, the P mode sequences are extremely long, so that the sequences repeat no more than once every 267 days. As a result, the terrestrial position of any Earth receiver can be determined to within an approximate accuracy of 16 to 30 meters.

However, the P mode sequences are classified and are not made publicly available by the United States government. In other words, the P mode is intended for use only by Earth receivers authorized by the United States government.

In order for the Earth receivers to differentiate the various C/A signals from the different orbiting GPS satellites, the Earth receivers usually include a plurality of different gold code sources for locally generating gold code sequences. Each locally-derived gold code sequence corresponds with each unique gold code sequence from each of the GPS satellites.

The locally-derived gold code sequences and the transmitted gold code sequences are cross correlated with each other over gold code sequence intervals of one millisecond. The phase of the locally-derived gold code sequences vary on a chip-by-chip basis, and then within a chip, until the maximum cross correlation function is obtained. Because the cross correlation for two gold code sequences having a length of 1,023 bits is approximately 16 times as great as the cross correlation function of any of the other combinations of gold code sequences, it is relatively easy to lock the locally derived gold code sequence onto the same gold code sequence that was transmitted by one of the GPS satellites.

The gold code sequences from at least four of the GPS satellites in the field of view of an Earth receiver are separated in this manner by using a single channel that is sequentially responsive to each of the locally-derived gold code sequences, or alternatively, by using parallel channels that are simultaneously responsive to the different gold code sequences. After four locally-derived gold code sequences are locked in phase with the gold code sequences received from four GPS satellites in the field of view of the Earth receiver, the relative position of the Earth receiver can be determined to an accuracy of approximately 60 to 300 meters.

The foregoing approximate accuracy of the NAVSTAR GPS is affected by (1) the number of GPS satellites transmitting signals to which the Earth receiver is effectively responsive, (2) the variable amplitudes of the received signals, and (3) the magnitude of the cross correlation peaks between the received signals from the different GPS satellites.

Because multiple PRN signals are received simultaneously at the Earth receiver, a common time interval exists wherein some of the codes can conflict. In other words, the codes cause a degradation in measurements of the time of arrival of each received PRN because of the cross correlations between conflicting received signals.

The time of arrival measurement for each PRN signal is made by determining the time of a peak amplitude of a cross correlation between the gold code sequence of the received PRN signal and the locally- derived PRN signal. When a locally-derived PRN signal is superimposed over a received PRN signal thereby increasing the averaging time of their cross correlation, the average noise contribution decreases. However, because the cross correlation errors between the received PRN signals are periodic, increasing the averaging time also results in increases to both the error signal and the cross correlation value between the received PRN's alike. Consequently, errors relating to the time of arrival of PRN signals are not reduced by cross correlation.

In addition to the GPS, it is known in the conventional art to use inertial systems in navigation systems to obtain position estimates of vehicles. Such an inertial reference unit (IRU) obtains specific-force measurements from accelerometers in a reference coordinate frame which is stabilized by gyroscopes, or gyros. An IRU can be of several types, including for example, laser, mechanical, or fiber optic. In an unaided navigation system using an IRU, the specific force (corrected for the effects of the Earth's gravity) as measured by an accelerometer is integrated into a navigation mathematical equation to produce the vehicle's position and velocity.

The instrument measurements of the IRU may be specified in a different rectangular coordinate frame than the reference navigation frame, depending on the platform implementation. The most commonly used reference navigation frame for near Earth navigation is the local-level frame (east-north-vertical). Several gimballed platform implementations exist with the forgoing reference navigation frame.

In a gimballed, local level-north seeking IRU, the gyroscopes and accelerometers are mounted on a platform which is torqued to maintain the platform level and azimuth pointing to the north. The platform is the reference plane. In contrast, in a gimballed, local-level azimuth-wander IRU, the platform is maintained level, but is not torqued about the vertical axis.

Furthermore, in a strap-down IRU, the gyroscopes and the accelerometers are directly mounted on the vehicle body. They measure the linear and angular motion of the vehicle relative to inertial space. The motion is expressed in vehicle coordinates. Therefore, in a strap-down IRU, it is necessary to first compute the altitude of the vehicle to the referenced navigation frame. Then, the computed altitude is used to transform the accelerometer measurements into the reference frame. After the accelerometer data of a strap-down IRU has been extrapolated into the reference frame, the solution of the navigation equations mentioned previously is identical in both the gimballed IRU and the strap-down IRU.

In the strap-down IRU, the altitude computations, which are required to resolve accelerometer measurements, are usually carried out at a high rate. The computations suffer from numerical errors because of the limited computer byte size and throughput availability. These computation errors depend on the frequency response of the sensor loop, data rate, and resolution and magnitude of the sensor output at the sampling time.

However, significant benefits arise from using the strap-down IRU, rather than the gimballed IRU. The strap-down IRUs are less costly. Moreover, the strap-down IRUs are generally smaller in physical size. Thus, the potential to realize size and cost savings in IRUs can make strap-down IRUs attractive for both military and commercial applications.

The performance of navigation systems using IRUs is primarily limited by errors contributed by the various constituent sensors within the IRUs. Gyroscopes drift. Accelerometers have inherent biases. Further, errors are contributed from improper scale factors and improper IRU alignment angles. Typically, the preceding errors cause inaccuracies in the estimates of vehicle positions, velocity, and altitude, which accumulate over time as a vehicle mission progresses. To some extent, the errors are dependent on user dynamics.

If a very accurate navigation system is required for a vehicle, high precision gyroscopes and accelerometers can be utilized to satisfy that need. However, such high precision equipment increases the complexity and costs of the vehicle.

EP-A-0181012 discloses a vehicle position estimating system combining GPS and inertial navigation systems. IEEE Position Location and Navigation Symposium, 4-7 Nov 1986, discloses an inertial navigation system with GPS comparison.

DE-A-3310111 discloses a navigation system with drift compensation. US-A-3630079 discloses a navigation system utilizing multiple sensors and error correction.

WO-A-8707056 discloses a system for avoiding obstacles in the path of a vehicle.

According to the present invention, there is provided a system for navigating a vehicle along a route comprising:

> means for storing route data representing a predetermined route;
> means for storing path data for each predetermined route;
> means for selecting a predetermined route for the
> vehicle to traverse; means for retrieving route data representing a selected predetermined route;
> means for retrieving path data for retrieved route data;
> means for generating a path from retrieved path data;
> means for associating vehicle commands with a generated path;
> means for executing associated vehicle commands causing the vehicle to attempt to follow a generated path;
> means for periodically calculating errors in following a generated path;
> means, responsive to calculated errors, for adjusting the execution of associated vehicle commands to reduce the calculated errors so that the vehicle tracks a generated path with a high degree of accuracy;
> means for detecting obstacles in the vehicle's direction of travel;
> means for avoiding collision with the obstacles, comprising means for stopping the vehicle to prevent a collision with the obstacles and means for generating a path around the obstacles;
> whereby an autonomous system for safely and efficiently navigating a vehicle along a route is realised; characterised in that
> the means for generating a path generates a posture contiguous path having rates of change of curvature dependant upon the steering constraints of the vehicle.

The present invention also provides a method of navigating a vehicle along a route comprising the steps of:

> storing route data representing a predetermined route;
> selecting a predetermined route for the vehicle to traverse;
> retrieving route data representing a selected predetermined route;
> retrieving path data for retrieved route data;

generating a path from retrieved path data;

associating vehicle commands with a generated path;

executing associated vehicle commands causing the vehicle to attempt to follow a generated path; periodically calculating errors in following a generated path;

adjusting, responsive to calculated errors, the execution of associated vehicle commands to reduce the calculated errors so that the vehicle tracks a generated path with a high degree of accuracy;

detecting collision with the obstacles by stopping the vehicle to prevent a collision with the obstacles, generating a path around the obstacles, or performing both; whereby an autonomous method of safely and efficiently navigating a vehicle along a route is realised; characterised in that

the generated path is a posture contiguous path having rates of change of curvature dependant upon the steering constraints of the vehicle.

The present invention can be used to aid any navigation system for autonomous vehicles. The autonomous vehicles can be stationary or moving. Moreover, the autonomous vehicles can be at or near the Earth's surface. In other words, the present invention provides for highly accurate and fast tracking of any terrestrial vehicle. It provides both apparatuses and methods, which allow for a superior positioning capability and, consequently, a flexible autonomous navigational capability.

Further features and advantages of the present invention will become apparent to one of skill in the art upon examination of the following drawings and detailed description. It is intended that any additional features and advantages be incorporated herein.

The present invention as defined in the claims can be better understood with reference to the text and to the following drawings.

Figure 1 illustrates a block diagram of the preferred embodiment of the present invention;

Figure 1A is a block diagram 100A of the operational GPS satellites in the NAVSTAR GPS;

Figure 2 illustrates four, simultaneous, navigation equations regarding four GPS satellites of the NAVSTAR GPS;

Figure 3 is a block diagram of a typical autonomous work site;

Figure 4 is a block diagram of the interrelationships between a navigator, a vehicle VPS architecture, and vehicle controls of the present invention.

Figure 5 is a block diagram illustrating elements ion an autonomous control system;

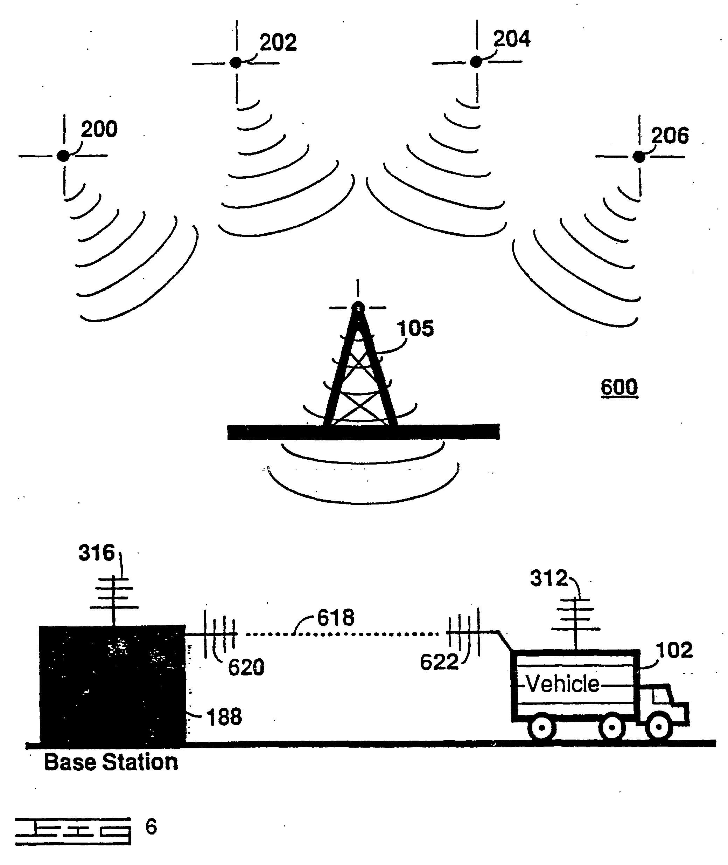

Figure 6 is a block diagram of the operation of a GPS;

Figure 7 is a block diagram of a GPS processing system of the preferred embodiment;

Figure 8 is a flow diagram of the GPS processing system of Figure 7;

Figure 9 is a block diagram of an MPS, including an odometer 902 and a inertial reference unit 9 (IRU) 904;

Figure 10 is a block diagram of the VPS;

Figure 11 is a block diagram of the VPS architecture of Figure 10;

Figure 12 is a diagram of vehicle route definitions;

Figure 13 is a diagrammatical representation of how postures and associated circles are obtained from objective points;

Figure 14 is a diagram of how the sign of a first clothoid segment is determined;

Figure 15 is a diagram of how the sign of a last clothoid segment is determined;

Figure 16 is a graphical illustration of a clothoid curve;

Figure 17 is a flowchart of a numerical method for calculating approximate Fresnel integrals;

Figure 18 is is a diagram showing the replanning of a path;

Figure 19 is a graph of B-spline curves of second, third, and fourth order;

Figure 20 is a diagram of an embodiment of the posture ring buffer;

Figure 21 is a diagram showing how an error vector including curvature is computed;

Figure 22 is a context diagram of the navigator of the present invention;

Figure 23 is a context diagram of a path tracking structure;

Figures 24A-24D are data flow summaries of the navigator 406;

Figure 25A is an illustration of a vehicle mounted scanner 404;

Figure 25B is an illustration of an autonomous vehicle scanning for an obstacle;

Figure 26 is a diagram of an autonomous vehicle avoiding obstacles;

I. Definitions

(1) "Absolute position" in the context of this document refers to a position relative to the center of the Earth. Generally, an absolute position will be in reference to a vehicle or the base station, both on or near the Earth's surface.

First, second, and third position estimates are all absolute positions.

**(2)** "Actual pseudorange" means an approximation of the distance between (1) a reference point and (2) a source of a terrestrial position determination system. In this document, actual pseudoranges usually refers to an approximation of the distance between (1) an Earth receiver and (2) GPS satellites and/or pseudolites. Actual pseudoranges are approximated by first measuring the propagation time delays between transmission and reception of the electromagnetic signals emanated from the GPS satellites and/or pseudolites. Actual pseudoranges can be readily calculated by multiplying the calculated time delays by the speed of light, or $2.9979245898 * 10^8$ m/s.

**(3)** "Anti-selective availability" refers to a method/technique/process for detecting and compensating for corrupted GPS data in the coarse/acquisition (C/A) mode of modulation.

**(4)** "Autonomous" is used in this document in its conventional sense. It indicates operation which is either completely automatic or substantially automatic or without significant human involvement in the operation. Generally, an autonomous vehicle means an unmanned vehicle in operation, or a vehicle in operation without a human pilot or co-pilot. However, an autonomous vehicle may be driven or otherwise operated automatically and also have a human passenger(s) as well.

**(5)** "Base correlator bias" means a spatial bias.

**(6)** "Base correlator bias technique" means a method/process for computing base correlator biases.

**(7)** "Base estimated position" or "BEP" refers to the relative position of the base station with respect to a vehicle. The BEP is used in the base correlator bias technique.

**(8)** "Base known position" or "BKP" is the absolute position of the base station (used as a reference point) which is known. The BKP can be an estimate itself, derived from any accurate positioning system. The BKP is assumed to be a more accurate estimate of the base station's absolute position than any other position estimate.

**(9)** "Base position estimate" means the absolute position estimate of the base station as derived from the GPS processing system within the host processing system. The base position estimate is substantially similar to the first position estimate derived by the GPS processing system at the vehicle. The base position estimate is computed in the base residuals bias technique

**(10)** "Base residuals bias" means a spatial bias which is the effective difference in the base known position (BKP) of the base station and the position estimate of the base station which is computed by the host processing system.

**(11)** "Base residuals bias technique" refers to a method for deriving base residuals biases.

**(12)** "Bias" refers to a differential between two measurements, usually position estimates (spatial bias) or clock rates (clock bias). Because one measurement is usually known to be more accurate than another, the bias is often times referred to as an "error."

**(13)** "Clock bias" means the difference in the clock times between (1) the transmission circuitry of GPS satellites and/or pseudolites and (2) the reception circuitry of an Earth receiver. When using a clock bias in the computation of a spatial bias, the clock bias is multiplied by the speed of light, or $2.998 * 10^8$ meters per second. Consequently, the clock bias is transformed into units of length.

**(14)** "Constellation" refers to a group comprised of GPS satellites and/or pseudolites whose signals are utilized to derive an absolute position estimate of a point on or near the Earth's surface. See "optimal constellation" below.

**(15)** "Constellation effects method" means a technique or process by which an optimal constellation of GPS satellites is selected from a larger group of GPS satellites in view of a vehicle.

**(16)** "Data radio" refers to a transmitter, receiver, transceiver, or any combination thereof, for communicating data at radio frequencies (RF).

**(17)** "Earth receiver" refers to any apparatus or device, or any part thereof, which receives and processes signals from a GPS and/or pseudolites. Earth receivers may be situated on or near the Earth's surface. Moreover, earth receivers may take the form of, for example, a vehicle or a base station.

**(18)** "Estimated pseudorange" refers to an approximation of the distance between (1) a reference point and (2) a source of a terrestrial position determination system.

In this document, actual pseudoranges usually refers to an approximation of the distance between (1) an Earth receiver and (2) GPS satellites and/or pseudolites. Estimated pseudoranges are computed from GPS data encoded on the electromagnetic signals being transmitted from the GPS satellites and/or the pseudolites. Almanac equations for computing estimated pseudoranges from the GPS data of the NAVSTAR GPS are publicly available.

**(19)** "First position estimate" or "FPE" or "FPE(i)" refers to an estimated absolute position of any vehicle which is outputted, in any form, from the GPS. The first position estimate and a second position estimate are independently derived.

Subsequently, these estimates are combined and filtered to derive a third position estimate. Consequently, the accuracy of the first position estimate affects the accuracy of the third position estimate.

**(20)** "GLONASS GPS" refers to the GPS which has been designed and which is currently being deployed by the U.S.S.R.

**(21)** "Global positioning system" or "GPS" is a type of terrestrial position determination system. In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined. The U.S. government has designated its GPS the "NAVSTAR." The government of the U.S.S.R. has designated its GPS the "GLONASS."

**(22)** "GPS data" means all data encoded on signals transmitted from GPS satellites of a GPS. GPS data includes, for example, ephemeris data and time data.

**(23)** "GPS processing system" refers to the system of the present invention for receiving signals from a terrestrial position determination system and for deriving first position estimates of vehicles from the received signals. The GPS processing system receives electromagnetic signals from GPS satellites of a GPS and/or from pseudolites.

**(24)** "Host processing system" refers to a computer system which is operating at the base station for performing methods and techniques which increase the accuracy of position estimates of vehicles. Data derived from these methods and techniques is transmitted to vehicles so that the vehicles can use the data when computing first, second, and third position estimates.

The architecture/hardware of the host processing system is substantially similar to the architecture/hardware of the VPS.

**(25)** "Inertial reference unit" or "IRU" refers to a system, usually on-board a vehicle, for aiding in the derivation of a second position estimate of the vehicle. An IRU obtains specific-force measurements from accelerometers in a reference coordinate frame which is stabilized by gyroscopes, or gyros. An IRU can be of a laser type or a mechanical type. In an unaided navigation system using an IRU, the specific force (corrected for the effects of the Earth's gravity) as measured by an accelerometer is integrated into a navigation mathematical equation to produce the vehicle's position and velocity. The IRU is part of the MPS.

**(26)** "Kalman filter" is used in its conventional sense. It refers to a software program for filtering out noise or errors in data. A GPS Kalman filter is utilized to filter out noise or errors in the GPS processing system in order to enhance the accuracy of first position estimates. Also, a VPS Kalman filter is utilized to filter out noise in the VPS in order to enhance the accuracy of second position estimates.

**(27)** "Motion positioning system" or "MPS" means a system comprising at least an IRU and a vehicle odometer. The MPS derives the second position estimate of any vehicle on or near the Earth's surface. Moreover, an MPS need not be present at the base station due to its stationary nature.

**(28)** "Optimal constellation" means a satellite constellation in which the relative positions of the GPS satellites in space affords superior triangulation capabilities in order to derive the most accurate estimate of a point on or near the Earth's surface.

**(29)** "Original bias" means a spatial bias calculated by subtracting both estimated pseudoranges and clock biases (in units of length) from actual pseudoranges. Clock biases are transformed into units of length by multiplying them by the speed of light, or $2.9979245898 * 10^8$ meters per second.

**(30)** "Original bias technique" is a method for computing original biases.

**(31)** "NAVSTAR GPS" means the GPS which has been designed and which is currently being deployed by the U.S. government.

**(32)** "Navigation system" refers to any systems and/or methods for guiding any vehicle on or near the Earth's surface. The navigation system can be on-board a vehicle. The VPS of the present invention can supply the navigation system of the vehicle with a very accurate, third position estimate of the vehicle so that the navigation system can thereby precisely guide the vehicle.

**(33)** "Parabolic bias" is a spatial bias computed by constructing parabolic models for the actual pseudoranges of each observed GPS satellite and extrapolating values from the parabolic models.

The parabolic biases are the actual pseudoranges minus the value extrapolated from the constructed parabolic models and minus the clock biases (in units of length, via multiplying by the speed of light).

**(34)** "Parabolic bias technique" is a method for computing parabolic biases for each of the GPS satellites that are utilized.

**(35)** "Preferred embodiment" refers to the best mode of implementing the present invention. The preferred embodiment is merely exemplary. The present invention should not be interpreted as being limited by the preferred embodiment.

**(36)** "Pseudolite" refers to a radiating system on or near the Earth's surface for emulating a GPS satellite. Electromagnetic signals, similar to those from GPS satellites, are transmitted from land-based pseudolites. One or more pseudolites can be used to emulate GPS satellites to enhance the computation of first position estimates.

**(37)** "Pseudolite data" means all data encoded on signals received from pseudolites. Pseudolite data resembles GPS data in many respects and includes similar information.

**(38)** "Pseudorange" means the distance between a source of a terrestrial position determination system and a point on or near the Earth's surface.

Sources can be GPS satellites and/or pseudolites. The terrestrial position determination system can be a GPS used with pseudolites, if any. Further, the point on or near the Earth's surface can be the base station and/or vehicles.

**(39)** "Satellite position predictor" is a method for determining the future positions of GPS satellites. The method allows for the selection of optimal constellations ahead of time.

**(40)** "Second position estimate" or "SPE" refers to an estimated absolute position of any vehicle which is outputted, in any form, from the MPS. Second position estimates include at least position information from an IRU. The second position estimate could include position information from a vehicle odometer situated on a vehicle.

**(41)** "Spatial bias" refers to a bias related to approximations of positions in two-dimensional or three-dimensional space. Spatial biases are used to offset a position estimate to enhance the accuracy of the position estimate. Spatial biases can be computed by a number of different methods of the present invention. Included in these methods are, for example, an original bias technique 1500 , a parabolic bias technique 1600 , a base residuals bias technique 1700 , and a base correlator bias technique 1700A.

**(42)** "System" is used for shorthand purposes to mean apparatus, method, or a combination of both apparatus and method. Moreover, it could include software, hardware, or a combination of hardware and software.

**(43)** "Position determination system" means any system having sources which emanate signals which can be used by a receiver of the signals to estimate the relative distance between the sources and the receiver. The signals may be in the form of, for example, electromagnetic waves, percussion waves, and/or sound waves.

**(44)** "Terrestrial position determination system" means any position determination system which can be used to ultimately estimate the terrestrial position of an Earth receiver. The signals may be in the form of, for example, electromagnetic waves, percussion waves, and/or sound waves. The terrestrial position determination system is the NAVSTAR GPS.

**(45)** "Third position estimate" or "TPE" refers an estimated absolute position of any vehicle that is outputted, in any form, from the VPS. Third position estimates are more accurate position estimates of vehicle positions than the first and second position estimates. Third position are derived by the VPS processing system from the first and second position estimates.

**(46)** "Vehicle" means any carrier for the transportation of physical things. Vehicles may take the form of mining trucks, construction trucks, farm tractors, automobiles, ships, boats, trains, balloons, missiles, or aircraft. In the preferred embodiment, a Caterpillar Inc. 785 off-highway truck is utilized.

**(47)** "Vehicle positioning system" or "VPS" refers to the system of the present invention for deriving position estimates of any vehicle. The position estimates from the VPS are extremely accurate and can be used by a navigation system on any vehicle to accurately guide the vehicle. Position estimates from the VPS are referred to as third position estimates.

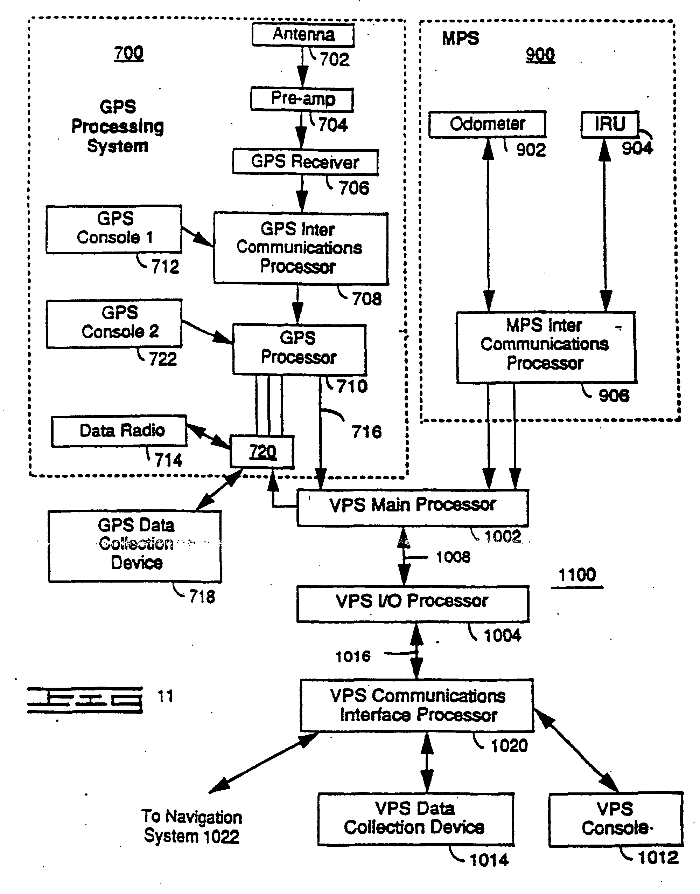

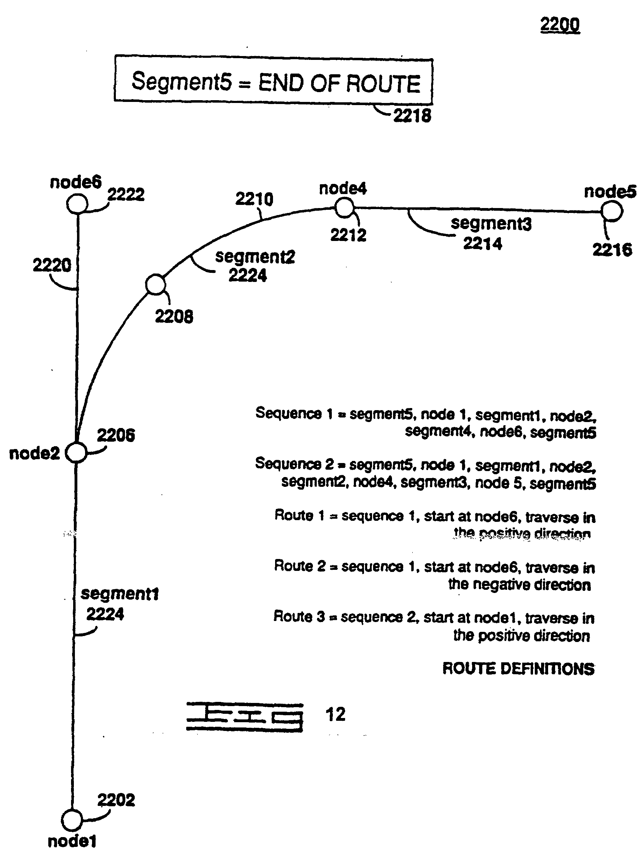

**(48)** "VPS processing system" means the processing system of the VPS. The VPS processing system derives third position estimates from the first and second position estimates. The architecture is depicted in Figures 10 and 11.

**(49)** "Weighted combiner" refers to a particular software program which processes data. Inputted data is assigned a predetermined weighing factor based on the estimated accuracy of the data and the technique used to gather the data. For example, the first position estimate of the GPS signal 716 is weighted heavier than the second position estimate of the IRU signal 910 because the former is inherently more Furthermore, the velocity measured by the IRU accurate. Furthermore, the velocity measured by the IRU can be weighted heavier than the velocity measured by the GPS processing system because the former is more accurate. The velocity measured by the GPS processing system is not used at all, but could be used in other implementations.

**(50)** "Weighted path history technique" is a method or process for increasing the accuracy of first position estimates outputted from the GPS processing system. The technique uses previous first position estimates to derive a vehicle path model for testing the validity of future first position estimates. Use of the weighted path history technique results in a reduction to wandering of first position estimates and in enhanced immunities to spurious position computations.

II. General Overview

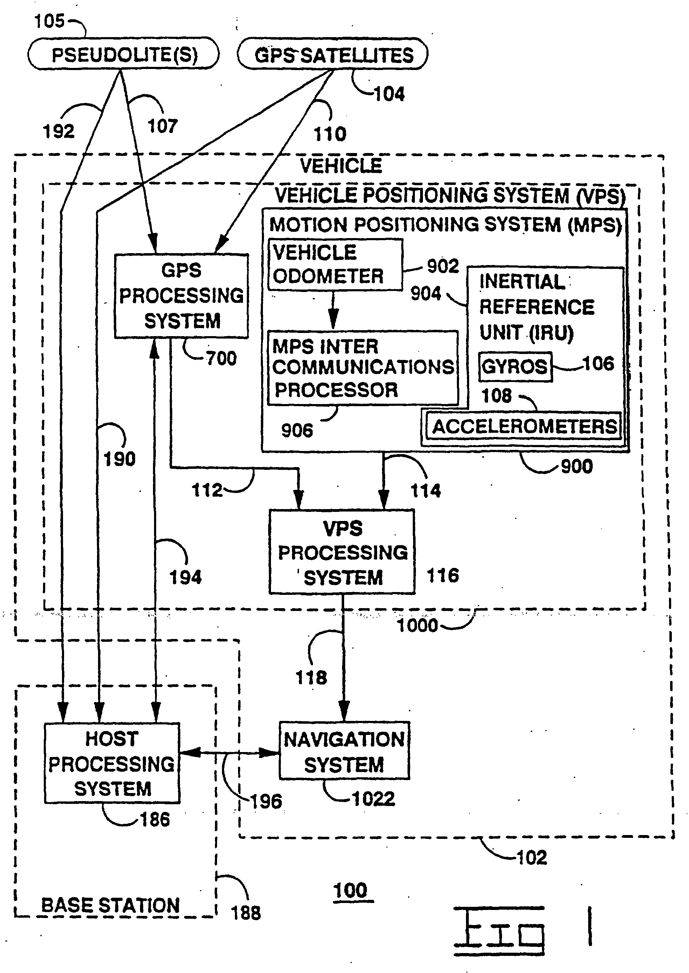

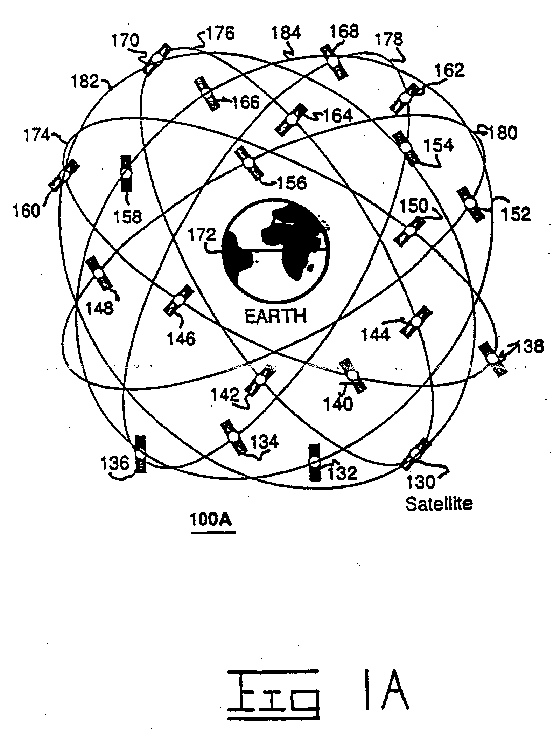

Figure 1 illustrates a high level block diagram 100 of the example system. To provide for the accurate autonomous operation of a vehicle 102 on or near the Earth's surface, the example system includes both a vehicle positioning system (VPS) 1000 and a navigation system 1022. Both of these systems include apparatus, methods, and techniques which, when integrated together, provide for highly accurate control of unmanned vehicles.

A. Vehicle Positioning System (VPS)

The task of guiding the autonomous vehicle 102 along a prescribed path requires, among other things, an accurate estimate of the vehicle's current position relative to some reference point. Once the current position is known, the vehicle 102 can be commanded to proceed to its next destination.

Using the VPS 1000 position estimates of the vehicle 102 can be determined with extreme preciseness. The VPS 1000 receives GPS data from GPS satellites 104 of a GPS, such as the NAVSTAR GPS or the GLONASS GPS.

The NAVSTAR GPS is utilized. Figure 1A illustrates the NAVSTAR GPS. GPS satellites 130-168 travel around the Earth 172 in six orbits 174-184.

Referring back to Figure 1, the VPS 1000 also may receive pseudolite data from a pseudolite(s) 105. The term "pseudolite" in the context of this document means a radiating device on or near the Earth's surface for emulating a GPS satellite.

From the GPS data and/or the pseudolite data, the VPS 1000 derives accurate estimates of position of the vehicle 102. The GPS data and/or the pseudolite data is significantly enhanced via numerous inventive techniques and methods of the example system to enhance the accuracy of vehicle position estimates.

More specifically, the VPS 1000 is a positioning system based on the incorporation of GPS data from the NAVSTAR GPS 104 and from a motion positioning system 900.

The motion positioning system 900 comprises an inertial reference unit (IRU) 904 and/or a vehicle odometer 902. The IRU 904 comprises a laser gyroscope(s) 106 and an accelerometer(s) 108 which can be used to produce position, velocity, roll, pitch and yaw data. The vehicle odometer 902 produces data on the distance travelled by the vehicle 102.

A first position estimate of the vehicle 102 is derived by the GPS processing system 700 from GPS data received from the GPS satellites 104 and from the pseudolite data received from the pseudolite(s) 105. To increase the accuracy of the first position estimate the example system implements a number of methods discussed in detail below. In addition, a second position estimate is derived by the MPS intercommunications processor 906 of the motion positioning system 900, which comprises the IRU 904 and/or the vehicle odometer 902.

As shown by respective arrows 112 and 114, the first position estimate and the second position estimate are then combined and filtered by a VPS processing system 116. The result as shown by an output arrow 118 is a more accurate, third position estimate.

B. Navigation System

The navigation system 1022 receives the third position estimate from the VPS 1000. The navigation system 1022 uses the precise, third position estimate to accurately navigate the vehicle 102. A primary purpose of the navigation system 1022 is to guide the vehicle 102 between points along pre-established or dynamically-generated paths.

The navigation system 1022 is situated on the vehicle 102 itself. In other words, it is essentially an "on-board" system. Moreover, the navigation system 1022 may be designed to be retrofitted into the vehicle 102.

So that the navigation system 1022 can guide the vehicle 102 to follow the pre-established or dynamically-generated paths, various models or conceptual representations are generated and utilized. For example, lines and arcs may be used to establish vehicle paths between objective points. Mathematical B-splines or clothoid curves may be used to model the actual path where the vehicle 102 is to navigate. These mathematical curves will be discussed in detail later in this document.

Using the above modelling or representational techniques provides for enhanced data communications, storage, and handling of the vehicle 102. The techniques further allow for simplification of supervisory tasks by providing a hierarchy of control and communication. The higher that a level of control exists on the hierarchical control scheme, the simpler the task and the more compact the commands.

The navigation system 1022 further provides for controlling the vehicle's mechanical systems, such as brakes, steering, and engine and transmission, to effect the necessary physical acts required to move, stop, and steer the vehicle 102.

The navigation system 1022 also checks the actual position of the vehicle 102 against the desired position to correct vehicle control in accord with the desired position. The navigation system 1022 may run multi-state models to enhance this checking capability. The navigation system 1022 also checks for errors or failures in the system itself and vehicle components. If errors or failures are detected, the navigation system 1022 can provide for fail-safe shutdown by bringing the vehicle 102 to a complete stop.

The navigation system 1022 further provides for different modes of controlling the vehicle 102. These include (1) a fully autonomous mode, where navigation of the vehicle 102 is automatically handled by the navigation system 1022; (2) a tele or remote control mode, where a remote human operator (not shown) may control the direction and motion, and so on, of the vehicle 102; and (3) a manual mode, where a human operator sitting in the vehicle 102 can take control of the vehicle 102 and drive it manually.

In the autonomous mode, obstacle detection is critical because if the vehicle 102 is not under control, then it could cause great damage to property and great injury to life. The navigation system 1022 can efficiently detect obstacles. Boulders, animals, people, trees, or other obstructions may enter the path of the vehicle 102 unexpectedly. The navigation system 102 is capable of detecting these obstacles, either stopping or plotting a path around the obstruction, and returning the vehicle 102 to its original route when the route is deemed safe.

Accurately tracking the desired route is another function of the navigation system 1022. The functioning and architecture of the navigation system 1022 has been designed for real time tracking of vehicle paths at speeds of up to approximately 30 miles per hour (mph).

C. Base Station

The example system can comprise a host processing system 186 at a base station 188. The host processing system 186 performs functions for both the VPS 1000 and the navigation system 1022.

With respect to the VPS 1000, the host processing system 186 receives GPS data and/or pseudolite data, as shown by respective arrows 190 and 192. In effect, the host processing system 186 as well as the base station 188 can serve as a known reference point to improve the accuracy of vehicle position estimates as discussed in detail below.

The host processing system 186 implements a number of methods for increasing the accuracy of vehicle position estimates. The satellite position predictor method 1800 discussed above is also implemented by the host processing system 186. The host processing system 186 will recognize the same satellite constellation that is observed by the vehicle 102.

Calculations are performed on the GPS data and/or pseudolite data to derive biases. The term "bias" in the context of this document refers to a differential between two measurements, usually position estimates (spatial bias) or clock rates (clock bias). Because one measurement is usually known to be more accurate than another, the bias is often times referred to as an "error."

To compute spatial biases, the host processing system 186 implements a number of methods. Included in these methods are, for example, an original bias technique 1500 , a parabolic bias technique 1600 , a base residuals bias technique 1700 , and a base correlator bias technique 1700A.

The foregoing differential correction techniques compensate for data errors. In other words, the biases computed at the host processing system 186 are indicative of data errors. As shown by an arrow 194, the biases are transmitted to the GPS processing system 700 of the vehicle 102. The GPS processing system 700 uses these biases to eliminate errors in vehicle position estimates.

The host processing system 186 further provides functions relating to the navigation system 1022 of the example system. The host processing system 186 serves as the highest level of control of the navigation system 1022, as indicated by an arrow 196. It handles scheduling and dispatching of the vehicle 102 with much the same results as a human dispatcher would achieve. Consequently, the host processing system 186 can thereby determine the work cycle of the vehicle 102.

The host processing system 186 commands the vehicle 102 to proceed from a current position to a future position via a specified route, so that the vehicle 102 may accomplish its work goals. The host processing system 186 can specify the vehicle routes by name, rather than by listing each point along the route, as is the case conventionally. Accordingly, the vehicle's on-board navigation system 1022 looks up the named vehicle route and translates the named vehicle route into sets of nodes and segments along the named vehicle route.

III Vehicle Positioning System

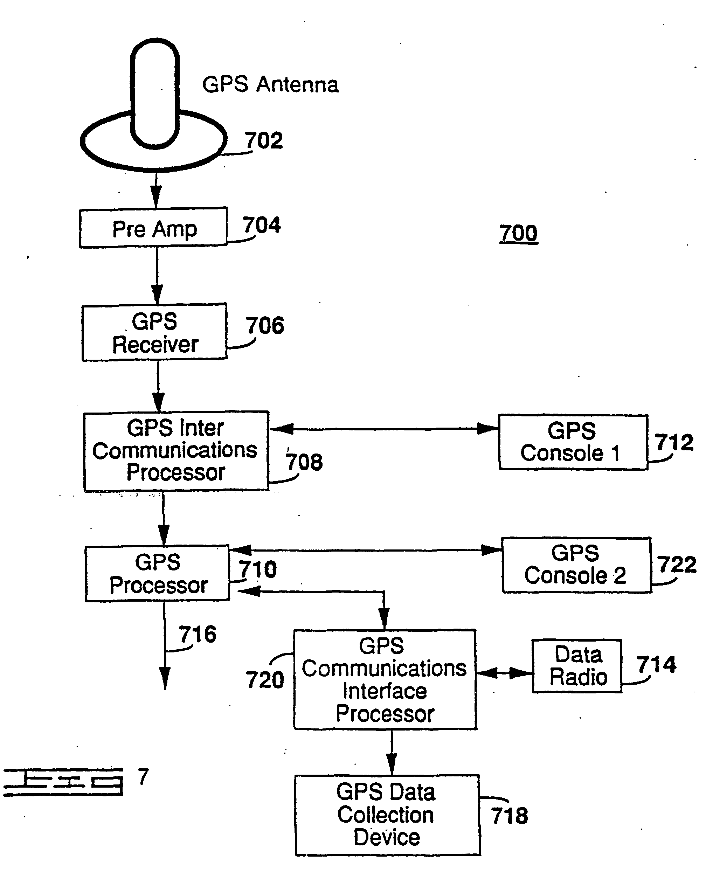

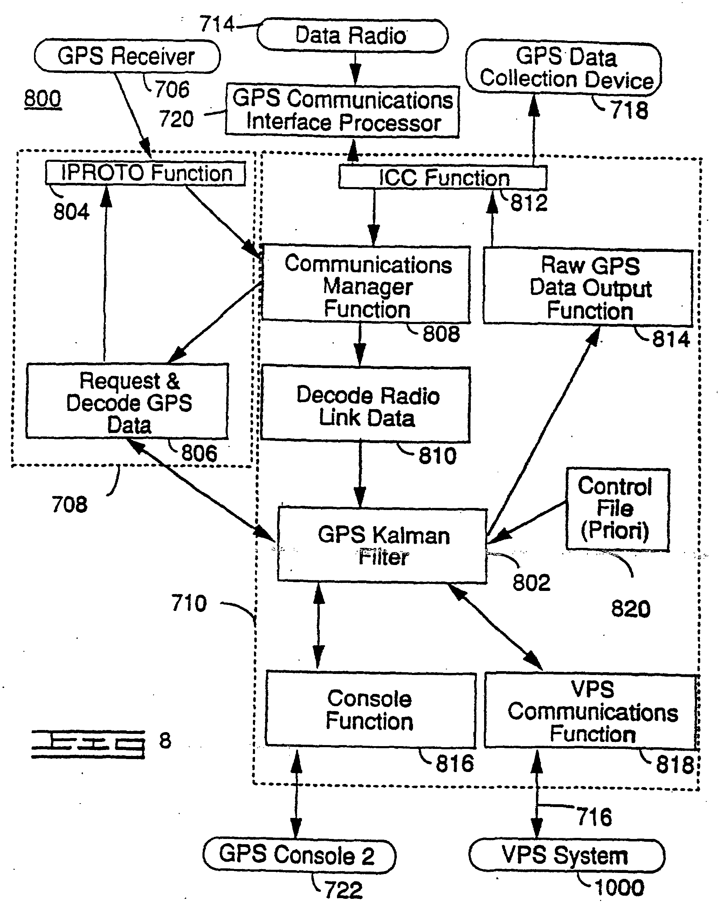

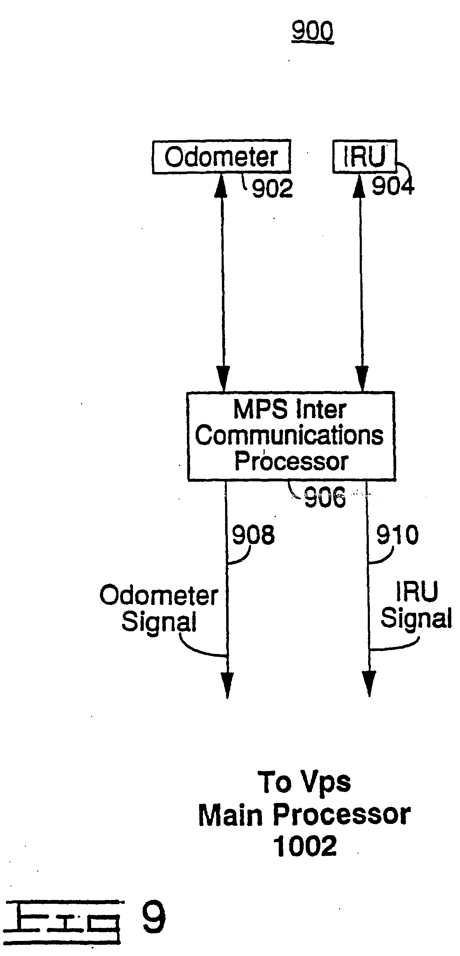

The following discussion relative to the VPS 1000 will make specific reference to Figures 7 through 11. Figures 10 and 11 show the architecture/hardware of the VPS 1000. The VPS 1000 is a highly accurate position determination system for a moving or stationary vehicle 102 on or near the Earth's surface.

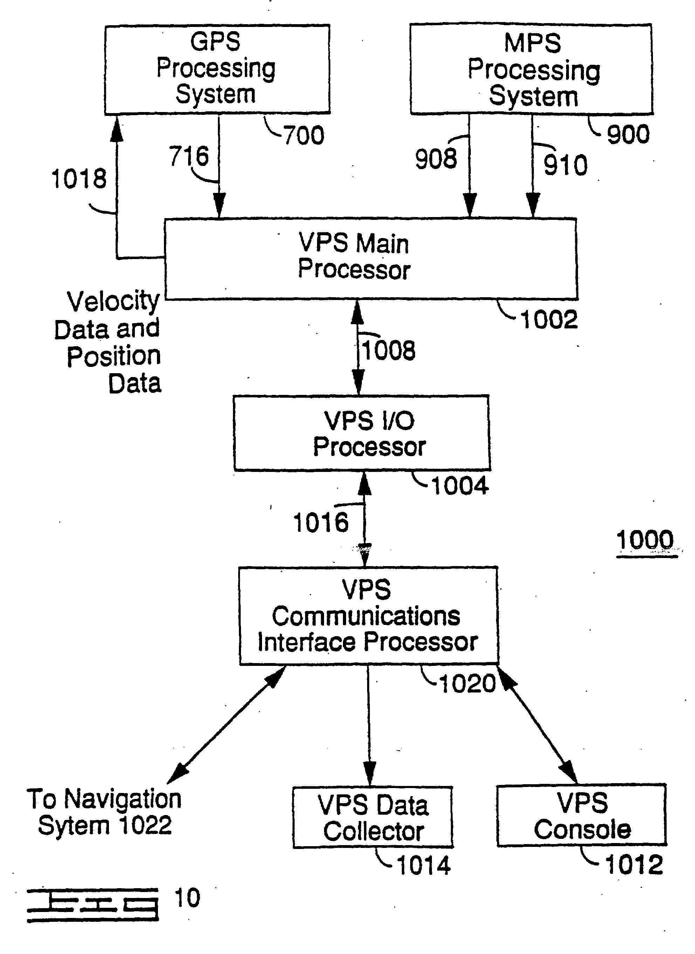

Recall that the VPS 1000 includes the GPS processing system 700 and the MPS 900, which are shown in respective Figures 7 and 9. Further recall that the MPS 900 includes the IRU 904 and the vehicle odometer 902, which are both shown in Figure 9. In effect, these systems have been enhanced and integrated by the example system to produce a highly effective position determining system.

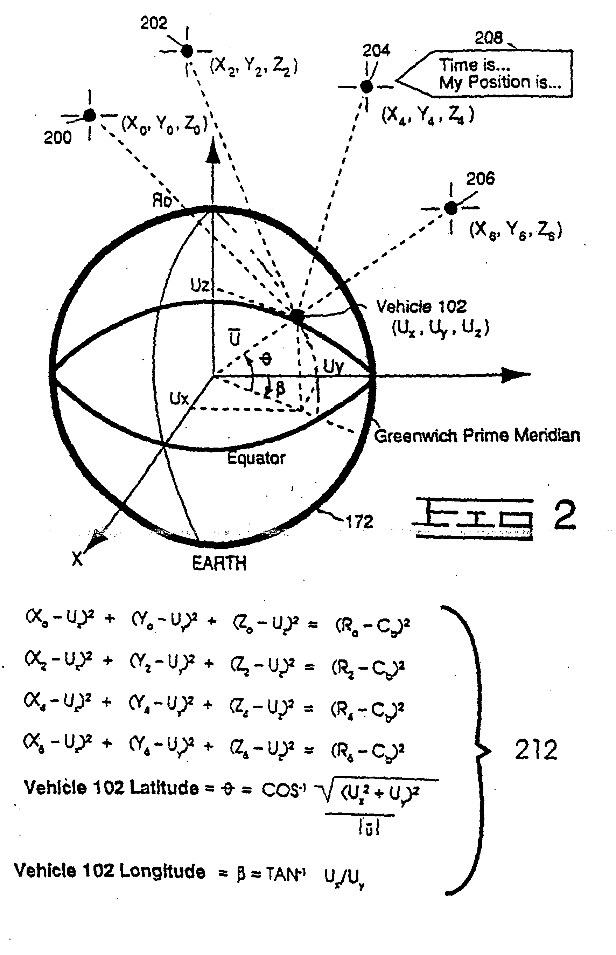

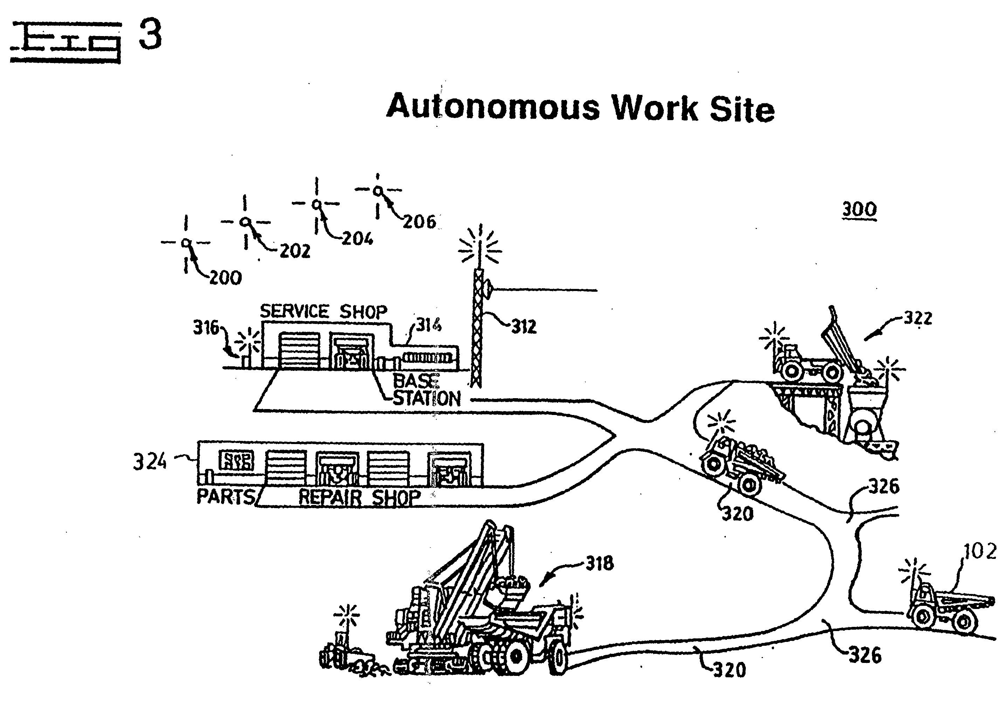

Referring to Figure 7, the GPS processing system 700 includes an antenna 702 connected to a GPS receiver 706. When the GPS satellites 104 in view of antenna 702 comprise multiple GPS satellites 200-206 as shown in Figures 2 and 3, the GPS receiver 706 reads each of their GPS data along with any pseudolite data from any pseudolite(s) 105 in view of antenna 702. In the preferred embodiment, the GPS receiver 706 is responsible for computing the first position estimate of the vehicle 102 from the GPS data and/or the pseudolite data.

To increase the accuracy of the first position method, a satellite position predictor method 1800 is implemented by a GPS processor 710 of the GPS processing system 700. The satellite position predictor method 1800 predicts the position of any GPS satellite at the current time or any future time.

Using the satellite position information, the GPS processing system 700 can determine the optimum GPS satellite constellation to recognize by using a constellation effects method 1300. The constellation effects method 1300 is also implemented by the GPS processor 710.

Pursuant to the constellation effects method 1300, a best constellation is selected from the data sources comprising the GPS satellites 200-206 and pseudolite(s) 105.

The GPS processor 706 computes a first position estimate of the vehicle 102 based on the best constellation and geometry/triangulation methods. The accuracy of the first position estimate is, in part, dependent on the number of GPS satellites used in the computation. Each additional GPS satellite used can increase the accuracy of the first position estimate. After the computation, the first position estimate of the vehicle 102 is transmitted to a VPS main processor 1002 of Figure 10.

Referring to Figure 9, the IRU 904 comprises laser gyroscopes and accelerometers which produce position, velocity, roll, pitch, and yaw data. The IRU 904 combines this information into a second position estimate of the vehicle 102. The odometer 902 can be implemented to measure the distance travelled by the vehicle 102. The data from the IRU 904 and the odometer 902 is also transmitted via the MPS intercommunications processor 906 to the VPS main processor 1002, as shown in Figure 10.

The VPS main processor 1002 combines the second position estimate from the MPS 900 (the IRU 904 and perhaps the odometer 902) with the first position estimate from the GPS processing system 700 to produce a more accurate third position estimate.

The VPS 1000 further implements a method of eliminating erratic or spurious, third position estimates which can cause vehicle "wandering." This method is called the weighted path history method Essentially, the path history of the vehicle 102 is used to statistically determine the accuracy of future estimates of the vehicle 102's position.

Referring now to Figures 1 and 3, a base station 188 provides a geographic proximate reference point for the VPS 1000. The base station 188 includes a host processing system 186. The host processing system 186 comprises similar a similar architecture and performs the same functions as the GPS processing system 700. However, the host processing system 700 performs additional functions for increasing the accuracy of first position estimates.

The satellite position predictor method 1800 is implemented by the host processing system 186, in addition to the GPS processing system 700 as discussed above. Accordingly, the host processing system 186 will recognize the same GPS satellite constellation that is observed by the vehicle 102 or include the same GPS satellite in a larger constellation.

calculations are performed on the GPS data and/or pseudolite data to derive biases, including spatial biases and clock biases. To compute spatial biases, the host processing system 186 implements a number of methods.

As shown by an arrow 194, the spatial and clock biases are transmitted to the GPS processing system 700 of the vehicle 102. The GPS processing system 700 uses these biases to eliminate errors in vehicle position estimates.


IV. Navigation System


A. Overview

In considering implementation of an autonomous navigation system, there are some basic questions which any autonomous system must be able to answer in order to successfully navigate from point A to point B. The first question is "where are we (the vehicle) now?" This first question is answered by the positioning system portion of the present invention, as discussed above in section III.

The next or second question is "where do we go and how do we get there?" This second question falls within the domain of the navigation system portion of the example system, discussed in this section (IV).

A further (third) question, really a refinement of the second one, is "how do we actually physically move the vehicle, for example, what actuators are involved (steering, speed, braking, and so on), to get there?" This is in the domain of the vehicle controls subsystem of the navigation system.

As has been discussed implicitly above, autonomous navigation, of a mining vehicle as an example, may provide certain significant advantages over conventional navigation. Among them is an increased productivity from round the clock, 24 hr. operation of the vehicles. The problems presented by dangerous work environments, or work environments where visibility is low, are particularly well suited to solution by an autonomous system.

There are, for instance, some mining sites where visibility is so poor that work is not possible 200 days of the year. There are other areas which may be hazardous to human life because of being contaminated by industrial or nuclear pollution. An area may be so remote or desolate that requiring humans to work there may pose severe hardships or be impractical. The application of the example system could foreseeably include extraterrestrial operations, for example, mining on the Moon, provided that the necessary GPS satellites were put in Moon orbit.

In a typical application , as shown in Figure 3, with regard to the navigation of a mining vehicle at a mining site, there are three basic work areas: the load site, the haul segment, and the dump site. At the load site, a hauling vehicle may be loaded with ore in any number of ways, by human operated shovels for instance, controlled either directly or by remote control, or by autonomous shovels. The hauling vehicle then must traverse an area called the haul segment which may be only a few hundred meters or may be several km's. At the end of the haul segment is the dump site, where the ore is dumped out of the hauling vehicle to be crushed, or otherwise refined, for instance.

Autonomous positioning and navigation may be used to control the hauling vehicle along the haul segment. Autonomously navigated refuelling and maintenance vehicles are also envisioned.

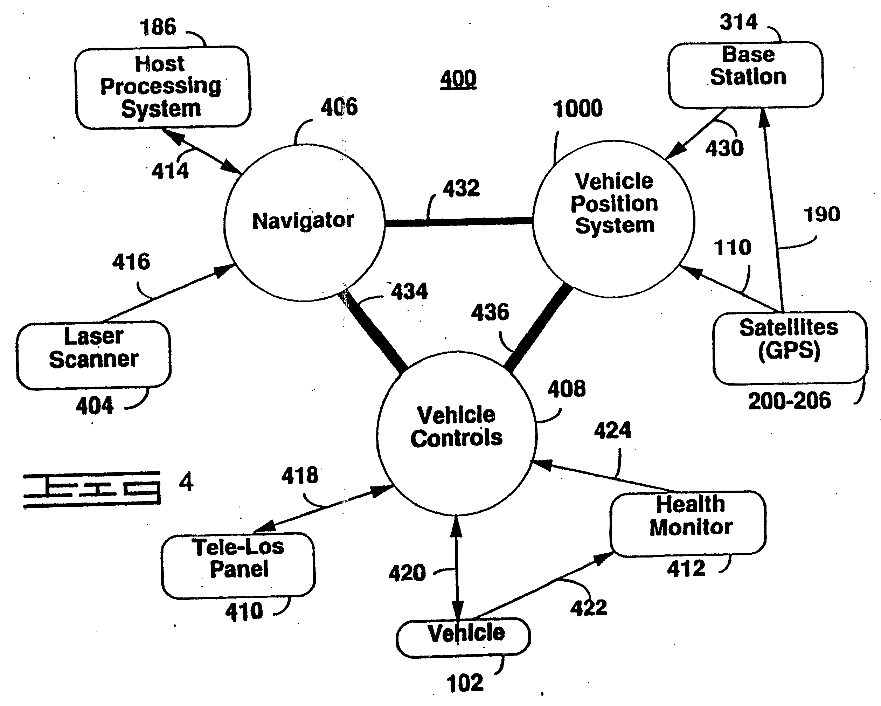

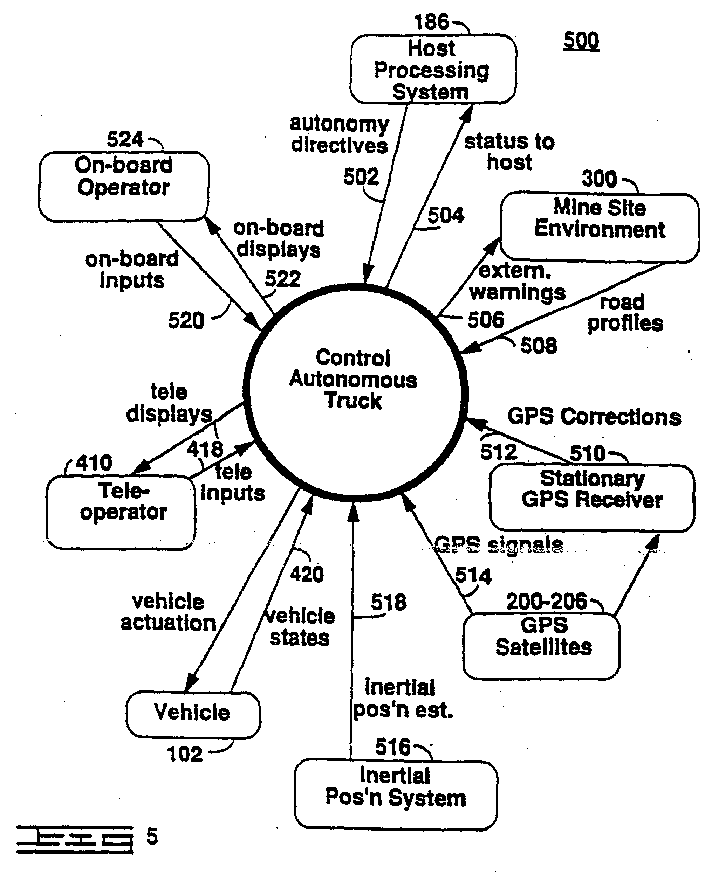

Referring now to Figures 4 and 5, navigation of the AMT (Autonomous Mining Truck) encompasses several systems, apparatus and/or functions. The VPS 1000 subsystem of the overall AMT system as described above, outputs position data that indicates where the vehicle is located, including, for example, a North and an East position.

Referring now to Figures 4 and 5, position data output from the VPS is received by a navigator 406. The navigator determines where the vehicle wants to go (from route data) and how to get there, and in turn outputs data composed of steer and speed commands to a vehicle controls functional block 408 to move the vehicle.

The vehicle controls block then outputs low level commands to the various vehicle 102 systems, such as the governor, brakes and transmission. As the vehicle is moving towards its destination, the vehicle controls block and the VPS receive feed-back information from the vehicle indicative of, for example, any fault conditions in the vehicle's systems, current speed, and so on.

Navigation also must include an obstacle handling (detection and avoidance) capability to deal with the unexpected. A scanning system 404 detects obstacles in the vehicle's projected trajectory, as well as obstacles which may be approaching from the sides and informs the navigator of these.

The navigator may be required to then decide if action is required to avoid the obstacle. If action is required, the navigator decides how to avoid the obstacle. And after avoiding the obstacle, the navigator decides how to get the vehicle back onto a path towards its destination.

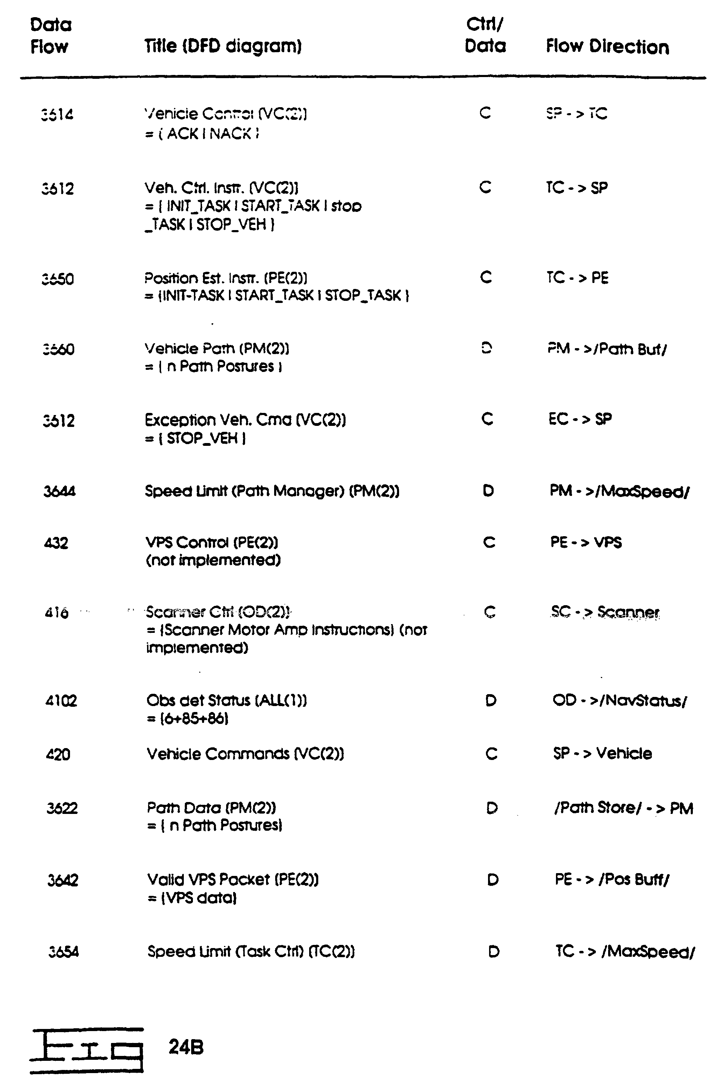

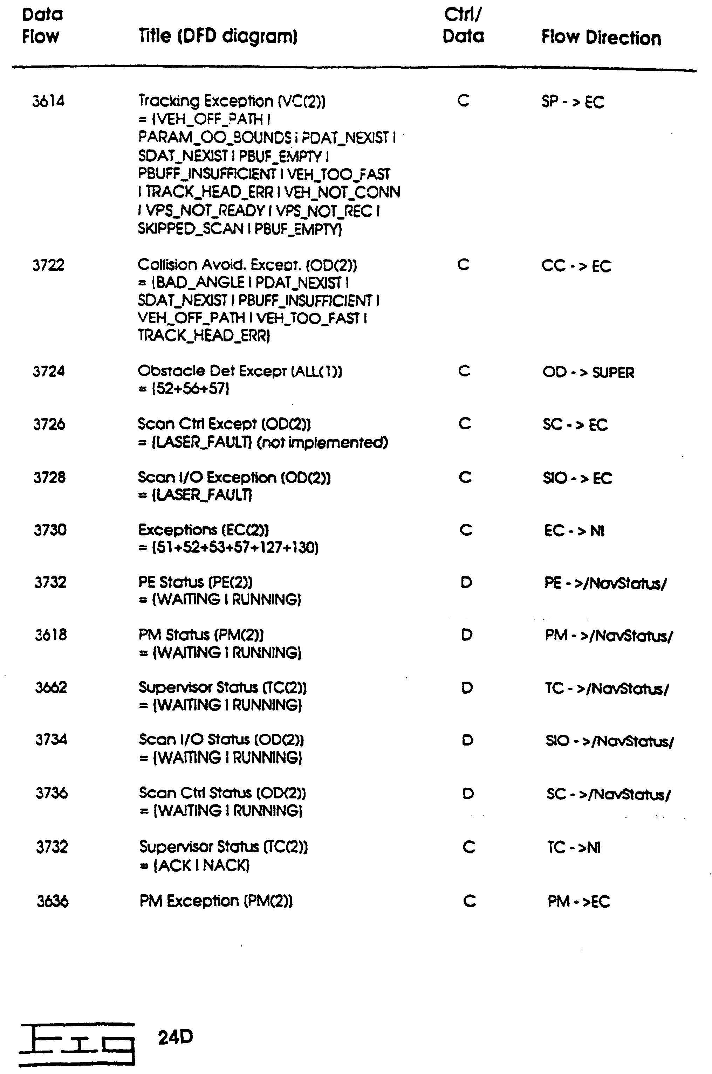

Referring now to Figure 22 titled the context diagram, and Figure 24A-24D definitions of the communications, which are shown as circles with numbers in them, are provided below:

502. Host commands & queries:
Commands given by the host to the vehicle manager. These commands could be of several types:

initiate/terminate;
supply parameters;
emergency actions; and
directives.

Queries inquire about the status of various parts of the navigator.

504. replies to host:
These are responses to the queries made by the host.

432. position data:
This is streamed information provided by the VPS.

416. Range data:
This is range data from the line laser scanner.

432. VPS control:
These are commands given to the VPS to bring it up, shut it down and switch between modes.

416. scanner control:
These are commands sent to the laser scanner to initiate motion and set follow velocity profile.

420. steering & speed commands
These are commands given to the vehicle to control steering and speed. These commands are issued at the rate of 2-5 Hz.

Referring to Figure 5, both the VPS and the navigator are located on the vehicle and communicate with the base station 188 to receive high level GPS position information and directives from a host processing system 186. The system gathers GPS position information from the GPS satellites 200-206 at the base station and on-board the vehicle so that common- mode error can be removed and positioning accuracy enhanced.

Alternatively, portions of the VPS and navigator may be located at the base station.

The host at the base station may tell the navigator to go from point A to point B, for instance, and may indicate one of a set of fixed routes to use. The host also handles other typical dispatching and scheduling activities, such as coordinating vehicles and equipment to maximize efficiency, avoid collisions, schedule maintenance, detect error conditions, and the like. The host also has an operations interface for a human manager.

It was found to be desirable to locate the host at the base station and the navigator on the vehicle to avoid a communications bottleneck, and a resultant degradation in performance and responsiveness. Since the host sends relatively high-level commands and simplified data to the navigator, it requires relatively little communication bandwidth. However, in situations where broad-band communication is available this may not be a factor.

Another factor in determining the particular location of elements of the system is the time-criticality of autonomous navigation. The navigation system must continually check its absolute and relative locations to avoid unacceptable inaccuracies in following a route. The required frequency of checking location increases with the speed of the vehicle, and communication speed may become a limiting factor even at a relatively moderate vehicle speed.

However, in applications where maximum vehicle speed is not a primary consideration and/or a high degree of route following accuracy is not critical, this communication factor may not be important. For example, in rapidly crossing large expanses of open, flat land, in a relatively straight path, it may not be necessary to check position as often in the journey as it would be in navigating a journey along a curvaceous mountain road.

conceptually, the navigation aspects can be arbitrarily divided into the following major functions:

route planning/path generation;
path tracking; and
obstacle handling.

The function of the present invention are discussed below.

B. Route Planning/Path Generation

1. Introduction

Autonomous vehicle navigation in accordance with the present invention, conceptually consists of two sub problems, path generation and path tracking, which are solved separately.

Path generation uses intermediate goals from a high level planner to generate a detailed path for the vehicle 102 to follow. There is a distinct trade-off between simplicity of representation of such plans and the ease with which they can be executed. For example, a simple scheme is to decompose a path into straight lines and circular curves. However, such paths cannot be tracked precisely simply because of discontinuities in curvature at transition points of segments that require instantaneous accelerations.

Following path generation, path tracking takes, as input, the detailed path generated and controls the vehicle 102 to follow the path as precisely as possible. It is not enough to simply follow a pre-made list of steering commands because failure to achieve the required steering motions exactly, results in steady state offset errors. The errors accumulate in the long run. Global position feedback 432 may be used to compensate for less than ideal actuators. Methods have been developed for the present invention which deviate from traditional vehicle control schemes in which a time history of position (a trajectory) is implicit in the plan specified to the vehicle 102.

These methods are appropriately labelled "path" tracking in that the steering motion is time decoupled; that is, steering motions are directly related to the geometric nature of the specified path, making speed of the vehicle 102 an independent parameter.

Referring now to Figure 3, an autonomous vehicle 102 may be required to traverse a haul segment 320 to a dump site 322, and after dumping its load, traverse another haul segment to a service shop 324, under the direction of the host processing system 186. The host processing system 186 determines the vehicle 102's destinations, which is called "cycle planning." The determination of which routes to take to get to a desired destination must be accomplished by "route planning."

"Route planning" is the determination of which path segments to take to get to a desired destination. In general, a route can be thought of as a high-level abstraction or representation of a set of points between two defined locations. Just as one can say to a human driver "take route 95 south from Lobster, Maine to Miami, Florida," and the driver will translate the instruction into a series of operations (which may include starting the vehicle 102, releasing the brake 4406, engaging the transmission 4610, accelerating to the posted speed limit, turning the steering wheel 4910, avoiding obstacles 4002, and so on), the autonomous navigation system of the present invention performs similarly. As used in the system of the present invention, a "route" is a sequence of contiguous "segments" between the start and end of a trip.

An autonomous vehicle 102 may begin at any position in the sequence and traverse the route in either direction. A "segment" is the "path" between "nodes." A "node" is a "posture" on a path which requires a decision. Examples of nodes are load sites 3318, dump sites 322, and intersections 326.

There are various types of segments. For instance, there are linear and circular segments. Linear segments (lines) are defined by two nodes. Circular segments (arcs) are defined by three nodes.

"Postures" are used to model parts of a route, paths and nodes for instance. Postures may consist of position, heading, curvature, maximum velocity, and other information for a given point on the path.

A "path" is a sequence of contiguous postures.

A segment is, therefore, a sequence of contiguous postures between nodes. All segments have a speed associated with them, which specifies the maximum speed with which the vehicle 102 is to traverse that segment. The navigator 406 can command slower speeds, if necessary, to meet other requirements.

Determining which postures are required to define a path segment by analytical, experimental or a combination of both, is called "path planning" in accordance with the present invention. To bring the discussion full circle, a sequence of contiguous routes, as mentioned above, is referred to as a "cycle," and a vehicle 102's work goals determine its "cycle."

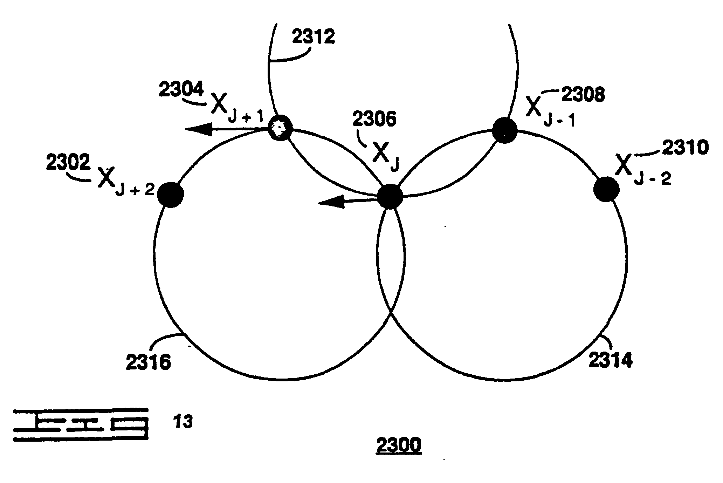

Therefore, to define a route one must first define the nodes and segments. Next, the nodes and segments must be ordered. Finally the routes must be defined by specifying where in the ordered set a route is to begin, and in which direction the ordered set is to be traversed (See Figure 12 which illustrates these concepts of the present invention).

The aforementioned method of defining routes was developed for memory efficiency in the present invention. It is also a convenient way to define many routes on a specific set of nodes and segments.

In a real world example of the present invention, picture a site where there are many intersecting roads 326. A route programmer would define nodes at the intersections, and segments to define the roads between the intersections. Routes would therefore be determined by the roads and intersections. There will however, be many ways to get from point A to point B (many routes) with a fixed set of intersections and roads.

The path-tracking method of the present invention (discussed below) uses route curvature to steer the vehicle. Methods of route definition using lines and arcs do not provide for continuous curvature. Clothoid curves are another way to define routes.

Another method of defining routes developed by the inventors, fits B-splines to the driven data. B-splines provide continuous curvature and therefore enhance tracking performances. In addition, since B- splines are free form curves, a route may be defined by a single B-spline curve. By using free form curves, a more robust method (semi-automatic) for fitting routes to data collected by driving the vehicle over the routes is produced by the present invention.

Referring to Figures 4 and 12, in operation, the host processing system 186 from the base station 188 commands an identified vehicle 102 to take route N from its present location. The navigator 406 functions to generate a path by translating "route 1" into a series of segments, each of which may have a "posted" or associated maximum speed limit, which together form a generated path for the vehicle to attempt to follow. By specifying routes and commanding the autonomous vehicle 102 with high-level commands this way, enormous data requirements and inefficiencies are in the present invention avoided in giving directions.

The navigator 406 stores the routes as a linked-list of path segments, rather than the set or series of sets of individual points. These segments are also abstractions of the set of points between defined locations or nodes.

A LINKER then takes given path segments and generates a linked-list of control points, allowing for flexibility and efficiency. Path segments are shared by different routes, as is shown in Figure 12.

The path segments are stored in a memory called the TARGA as a set of arcs, lines, and postures. For instance, in one embodiment of the present invention, an analytical generator function generates paths using these arcs, lines and postures. In another embodiment of the present invention, B-splines are used as a mathematical representation of a route, as mentioned above.

In another embodiment or the present invention, "clothoid" curves are used in generating path segments. These are discussed below.

### a. CLOTHOID PATH SEGMENTS

As discussed above, part of the navigation problem addressed and solved by the present invention is really two sub-problems: path planning and path generation. These are solved separately by the present invention.

Path planning proceeds from a set of sub-goals using some path optimization function and generates an ordered sequence of "objective" points that the vehicle 102 must attain.

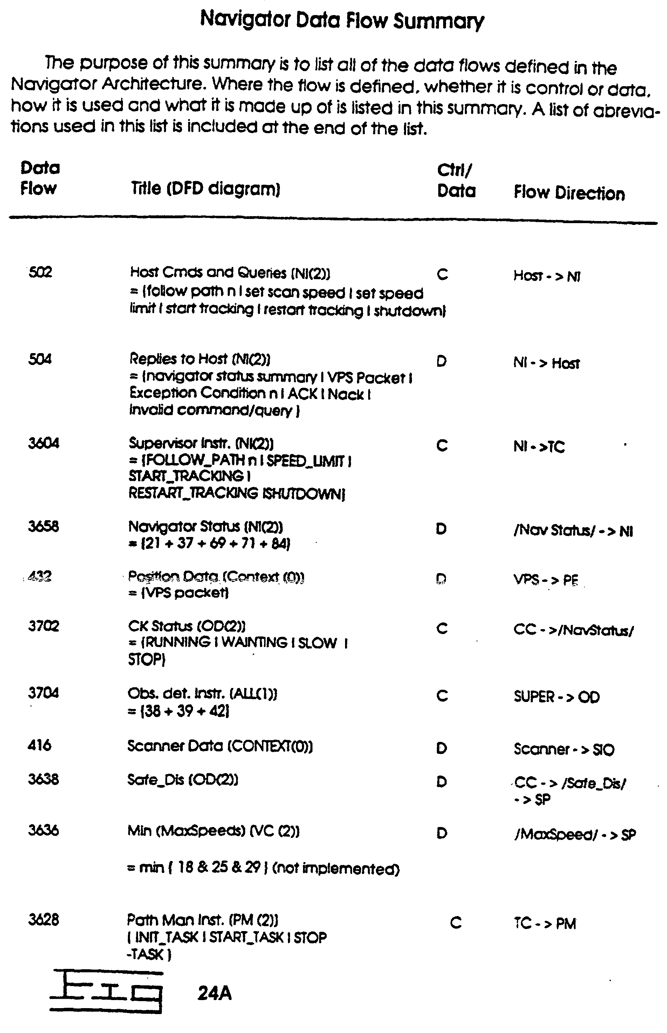

The challenge of path generation is to produce from the objective points (of path planning), a continuous, collision-free path 3312, smooth enough to be followed easily by the autonomous vehicle 102. For example, a simple scheme is to decompose a path 3312 into straight lines and circular curves. The path 3312 is then converted into a sequence of explicit directives provided to the vehicle 102 actuators to keep the vehicle on the desired path 3312. It should be noted that there is a distinct trade-off between simplicity of representation of such plans and the ease with which they can be executed. (Figure 21)

The ability of an autonomous vehicle 102 to track a specified path 3312 is dependant on the characteristics of the path. Continuity of curvature and the rate of change of curvature (sharpness) of the generated path 3312 are of particular importance since these parameters dictate steering motions required of a vehicle 102 for it to stay on the desired path 3312. Discontinuities in curvature are impossible to follow since they require an infinite acceleration. For some autonomous vehicle configurations, the extent to which the sharpness of a path is linear is the extent to which steering motions are likely to keep the vehicle on the desired path 3312, since linear sharpness of a path equates to approximately constant velocity of steering.

One method used by the present invention, is to compose paths as a sequence of straight lines and circular arcs. This method suffers from discontinuities in curvature where arcs meet. Another method of the present invention, is to use polynomial splines to fit paths between objective points. Splines assure continuity in curvature, but do not make any guarantees of linearity in sharpness.

Inability to track the requisite curvature results in steady state offset errors from the desired path 3312. These errors can be compensated for by closing a feedback loop on position 3314. This is sufficient in those scenarios where the response of the actuators is fast enough to guarantee negligible tracking errors and position sensing is accurate, such as on a factory floor. However, path tracking is simpler if the path is intrinsically easier to track.

The method of the present invention generates explicit paths that pass through a sequence of objective points. A derivative method of the present invention replans parts of the path dynamically in case the tracking error becomes large or the desired path is changed.

b. Modeling A Vehicle Path

Any path can be parameterized as a function of path length (s) by position coordinates (x(s), y(s)) 3304. That is, position coordinates x and y can be written as explicit functions of the path length s. Heading (O(s)) 3318 and curvature (c(s)) 3316 can be derived:

$$o(s) = \frac{dy(s)}{dx(s)} \qquad \text{(EQ. 1)}$$

$$c(s) = \frac{d0(s)}{ds} \qquad \text{(EQ. 2)}$$

The quadruple of these parameters, p = (x,y,0,c), is a posture 3314 that describes the state of an autonomous vehicle 102 at any point in time.

c. Clothoid Curves

Clothoid curves are used in an embodiment of the present invention. They are a family of curves that are posture-continuous, and are distinct in that their curvature varies linearly with the length of the curve:

$$c(s) = ks + C_i \qquad \text{(EQ. 3)}$$

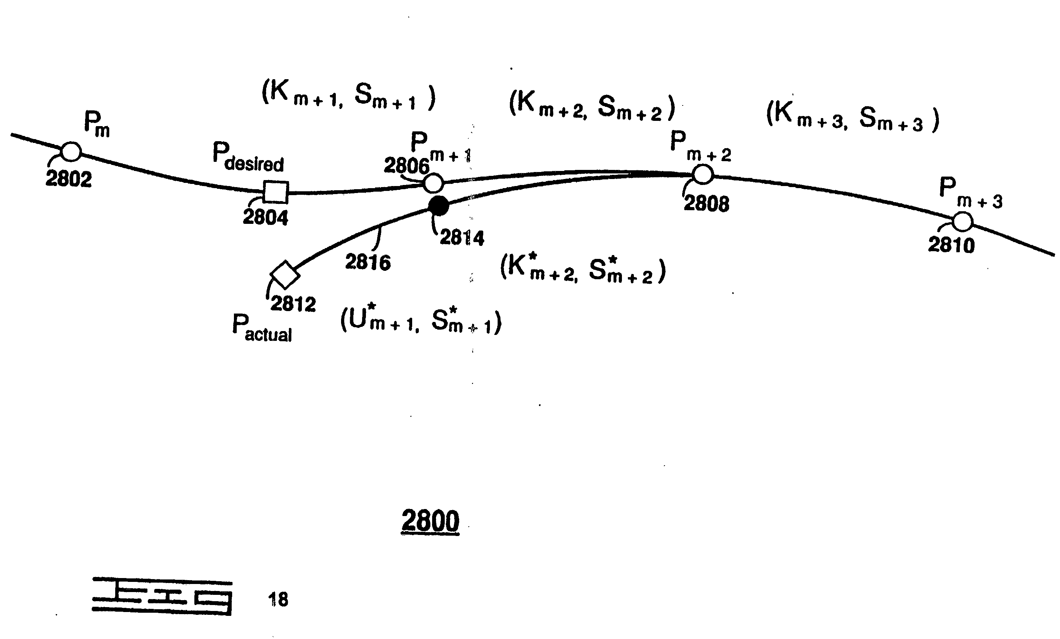

where k is the rate of change of curvature (sharpness) of the curve and subscript i denotes the initial state. A clothoid curve segment 2002 is shown in Figure 16.

Given an initial posture, sharpness of the clothoid segment and the distance along that segment, position, orientation and curvature at any point are calculated as follows:

$$\theta(s) = \theta_i + \int_0^s c(\xi)d\xi = \frac{k}{2}s^2 + c_i s + \theta_i \qquad \text{(EQ. 4)}$$

$$x(s) = x_i + \int_0^s \cos\theta(\xi)d\xi = \int_0^s \cos\left\{\frac{k}{2}\xi^2 + c_i\xi\right.$$
$$\left. + \theta_i\right\}d\xi + x_i \qquad\qquad (EQ.\ 5)$$

$$y(s) = y_i + \int_0^s \sin\theta(\xi)d\xi = \int_0^s \sin\left\{\frac{k}{2}\xi^2 + c_i\xi\right.$$
$$\left. + \theta_i\right\}d\xi + y_i \qquad\qquad (EQ.\ 6)$$

### d. Generation of a Posture-Continuous Path

Practical navigation problems require composite paths whose range and complexity cannot be satisfied by a single clothoid segment. Most paths require multiple segments that pass through a sequence of objective points.

### (1) Existing Methods

An article by Hongo et al. entitled, "An Automatic Guidance System of a Self-Controlled Vehicle -- The Command System and Control Algorithm", Proceedings IECON. 1985, MIT Press, 1985, proposed a method to generate continuous paths composed of connected straight lines and circular arcs from a sequence of objective points. While paths comprised solely of arcs and straight lines are easy to compute, such a scheme leaves discontinuities at the transitions of the segments as discussed above.

An article by Kanayama et al. entitled, "Trajectory Generation for Mobile Robots", Robotics Research: The Third International Symposium, ISIR, Gouvieux, France, 1986, makes use of paired clothoid curves with straight line transitions between postures. The constraint of straight line transitions is due to the integrals in Eqs. (7) and (8) which do not have closed form solutions. Kanayama simplified this problem by requiring $c_i=0$. Also, by rotating the reference frame by the amount of the initial orientation, $0_i=0$; only a straight forward approximation of

$$\int_0^s \sin(k\xi^2)d\xi$$

is left.

Kanayama's method leads to paths that are sharper at some points and less compact than necessary, with adverse consequences to control. In addition, the requirement for straight-line transitions precludes the local replanning of paths because there are no guarantees that a segment to be replanned will include an uncurved section.

### 2. Path Generation From a Sequence of Points

A two-step method of the present invention, to generate a unique posture-continuous path from a sequence of points is now described.

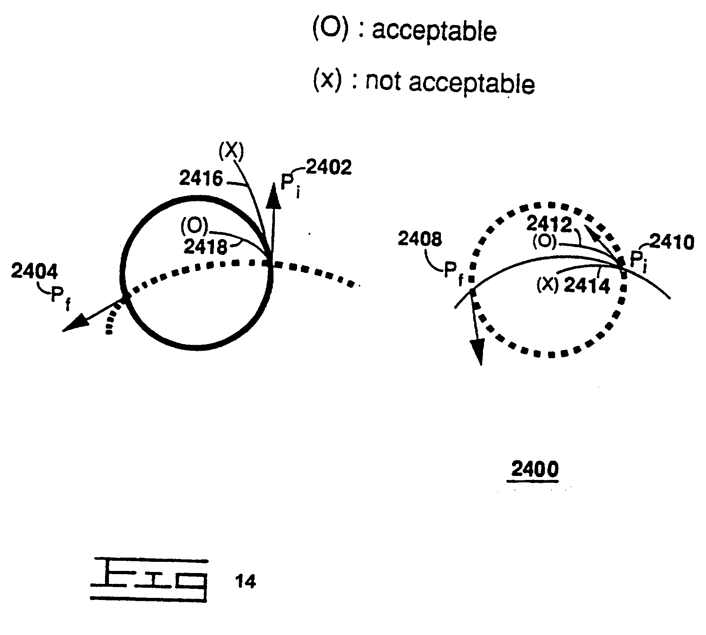

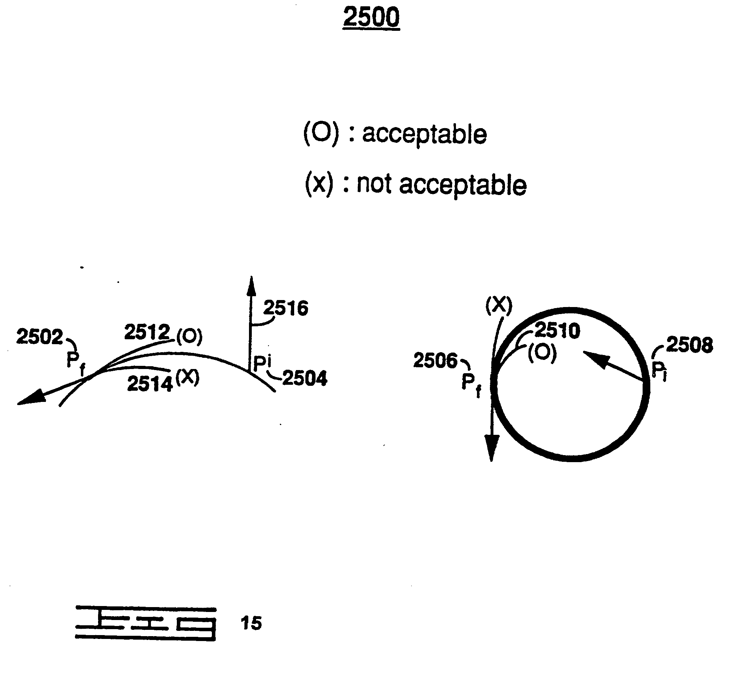

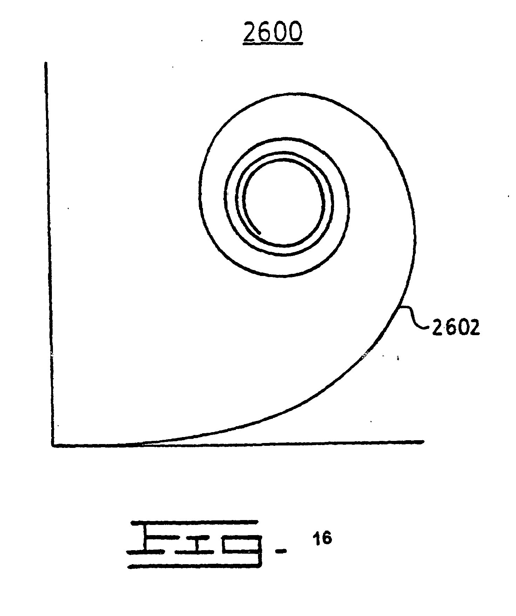

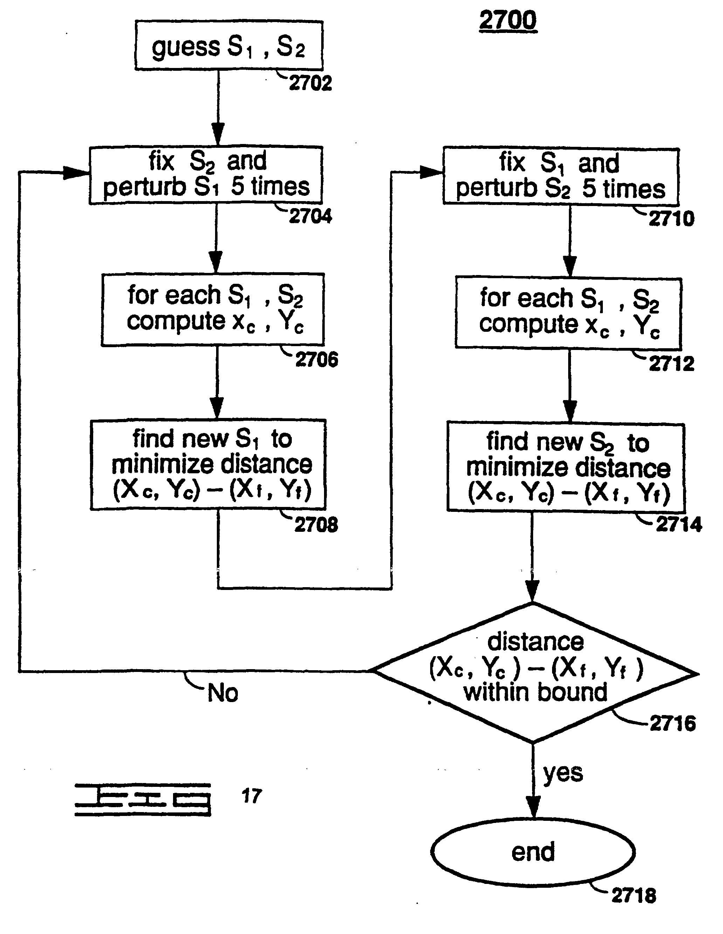

Referring now to Figures 13, 14 and 15) first step is to derive a sequence of unique postures 2302, 2304, 2306, 2308, 2310 from the objective points. The second step is to interpolate between those postures with clothoid segments. Heading and curvature at the starting and ending positions 2402, 2404 are presumed. Let $P_i$, $P_f$ be the starting and ending postures 2402, 2404, respectively.

It is not always possible to connect two postures with one clothoid curve segment because four equations EQ.2, EQ.4, EQ.5, and EQ.6 cannot be satisfied simultaneously with only two parameters (sharpness k and length s) of a clothoid curve.

In order to satisfy the four equations EQ.2, EQ.4, EQ.5, and EQ.6, one needs at least two clothoid curve segments. However, the general problem cannot be solved with two clothoid segments because if $k_i$ and $k_f$ have the same sign, in most cases a third segment is required in between. One adequate set of the clothoids connecting a pair of neighboring associated postures is the set of three clothoid segments $(k,s_1)$, $(-k,s_2)$, $(k,S_3)$. The subscripts denote the order of the clothoid segments from $P_i$. This combination is plausible for the following reasons:

1. The signs of k for the first and the last clothoid segments are the same.

2. k for the second clothoid segment is equal in magnitude and opposite in sign to that of the first and last segments. This enables the curve of three clothoid segments to satisfy the curvature variation between the starting and the ending curvatures by varying $s_1$, $s_2$, $s_3$, even though the sign of the first and the last clothoid segments satisfies the curve location requirement.

3. There are four variables in the combination: k, $s_1$, $s_2$, $s_3$. It is possible to find a unique solution satisfying the following four equations which describe the mathematical relationship between the starting and the ending postures.

$$c_f = c_i + k(s_1 - s_2 + s_3) \qquad \text{(EQ. 7)}$$

$$\theta_f = \theta_i + c_i(s_1 + s_2 + s_3) + k(s_1 s_2 - s_2 s_3 + s_3 s_1)$$
$$+ \frac{k}{2}(s_1{}^2 - s_2{}^2 + s_3{}^2) \qquad \text{(EQ. 8)}$$

$$x_f = x_i + \int_0^s \cos\theta_1(\xi)d\xi + \int_0^s \cos\theta_2(\xi)d\xi$$
$$+ \int_0^s \cos\theta_3(\xi)d\xi \qquad \text{(EQ. 9)}$$

$$y_f = y_i + \int_0^s \sin\theta_1(\xi)d\xi + \int_0^s \sin\theta_2(\xi)d\xi$$
$$+ \int_0^s \sin\theta_3(\xi)d\xi \qquad \text{(EQ. 10)}$$

where

$$\theta_1(\xi) = \theta_i + c_i\xi + \frac{k}{2}\xi_1{}^2$$

$$\theta_2(\xi) = \theta_i + c_i s_1 + \frac{k}{2}s_1{}^2 + (c_i + ks_i)\xi$$

$$-\frac{k}{2}\xi^2$$

$$\theta_3(\xi) = \theta_i + c_i(s_1+s_2) + k(s_1 s_2) + \frac{k}{2}(s_1{}^2 - s_2{}^2)$$

$$+ \{c_i + k(s_1-s_2)\}\xi + \frac{k}{2}\xi^2$$

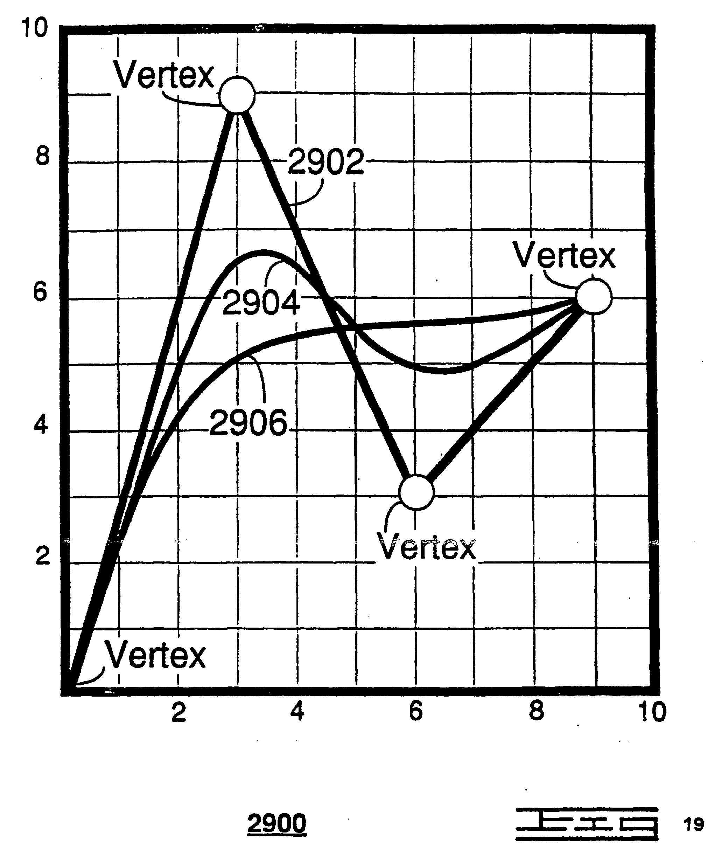

Referring now to the method shown in Figure 17. Since equations 9 and 10 above contain Fresnel integrals, for which there is no closed form solution, the values of k,s1,s2,and s3 are computed.

Paths resulting from the method have the following advantages over other methods:

o The method proceeds from an arbitrary sequence of points. Generation of postures is essential to exploratory planning where goals are commonly posed as an evolving string of points. Paths generated by the method pass through all the objective points whereas paths from Kanayama's method and the arc method are only proximate to many of the points because these methods start from a sequence of postures.

o The method guarantees continuity of position heading and curvature along the path. Further, sharpness is piecewise constant.

o Paths generated by the method always sweep outside the acute angles formed by straight line connection of the way points. The resulting paths are especially useful for interpolating around obstacles that are commonly on the inside of angles. In contrast, Kanayama's paths are always inside the angles.

3. Clothoid Replanning Paths

Clothoid replanning is done either to acquire the path initially, or to guide the vehicle 102 back to the desired path 3312 through normal navigation according to the present invention.

To avoid abrupt accelerations in an attempt to make gross corrections in tracking a pre-specified path, a path replanner is used by the present invention to generate a new path which converges smoothly to the desired path 3312 from the current position. Replanning decomposes to two sub problems:

1. Determining the point of convergence to the intended path 3308.
2. Planning a path from the current position 3302 to the convergent point 3308.

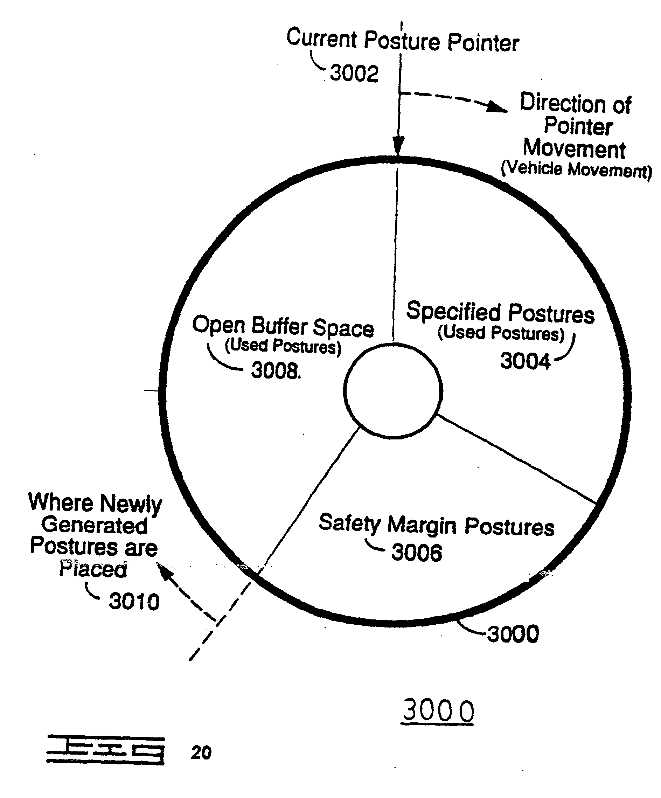

Reference is made to Figure 18 which graphically illustrates replanning a path in accordance with the present invention. A pre-specified path consists of interpolations 2804 between postures $(k,s)_m$ (m=1,. . .,n) 2804-2810 and the postures $P_m$ (located at the end of segment $(k,s)_m$). Assuming that the vehicle 102 deviates from the path between $P_m$ and $P_m+1$, then $P_m+2$ is chosen as the posture 334 to which the replanned path 2816 converges. The distance to Pm+2 is variable.

A curve composed of two curve segments is fitted to the postures (the current posture and the one chosen as a convergence posture) to obtain a replanned path 2816, satisfying four governing posture equations EQ.7, EQ.8, EQ.9, EQ.10. If we assume that the threshold that determines whether a path is to be replanned or not is much smaller than the length of each clothoid curve segment $(k,s)_m$, we can find a new posture-continuous path $((k^*_k+1, s_k+1),$ $(K^*_k+2, s^*_k+2))$ using a small perturbation from known $((k_k+1, s_k+1), (k_k+2, s_k+2))$. Since the replanned path 2816 is not likely to be very far from the original path 3312, two clothoid segments can be used.

4. Summary

In accordance with the present invention, generation of continuous paths for autonomous vehicle 102 can use clothoid segments to generate paths not only because the resulting path is posture continuous but also because linear curvature along the curve leads to steering angles that vary approximately linearly along the path, facilitating path tracking.

The approach of the present invention is as follows: first, a sequence of the postures is obtained using the objective points. Then, each of the adjacent postures is connected with three clothoid curve segments.

The present method accrues additional advantages in that preprocessing of the objective points is not necessary as with arcs and zero curvature clothoids. Further, the geometry of the paths generated always sweeps outside the acute angles formed by straight line connection of the way points. These are especially useful for interpolating around obstacles that are commonly on the inside of angles.

From the set of stored arcs, lines and postures, clothoid curves, B-splines, and so on, points along a path are generated with the VPS posture block.

Advantages of the present invention's handling routes in this way, besides reducing the bandwidth requirements between the host and the vehicle, effects data compression reducing data storage requirements, and functions to smooth-out paths.

5. B-Splines

B-splines are well known by mathematicians and those familiar with computer graphics (see "Mathematical Elements for Computer Graphics," by David F. Rogers and J. Alan Adams, McGraw-Hill Book Company, New York, N. Y., pages 144 to 155) as a means of describing the shape of a series of points by specifying the coefficients of a polynomial equation. This curve fit function is an Nth order polynomial, where N is user specified and depends on the desired shape of the curve. The B-spline curve can be of any order and are continuous to the order of the curve fit function minus one.

B-splines are used in an embodiment of the present invention. B-splines lend themselves well to path generation in the present invention because an arbitrarily long path can be described by a low number of coefficients, thus reducing the amount of data storage. Provided that the order of the curve fit function is high enough (three or larger), then the generated path will be smooth in curvature, resulting in a path which is inherently easy to track with the aforementioned embodiments of the present invention.

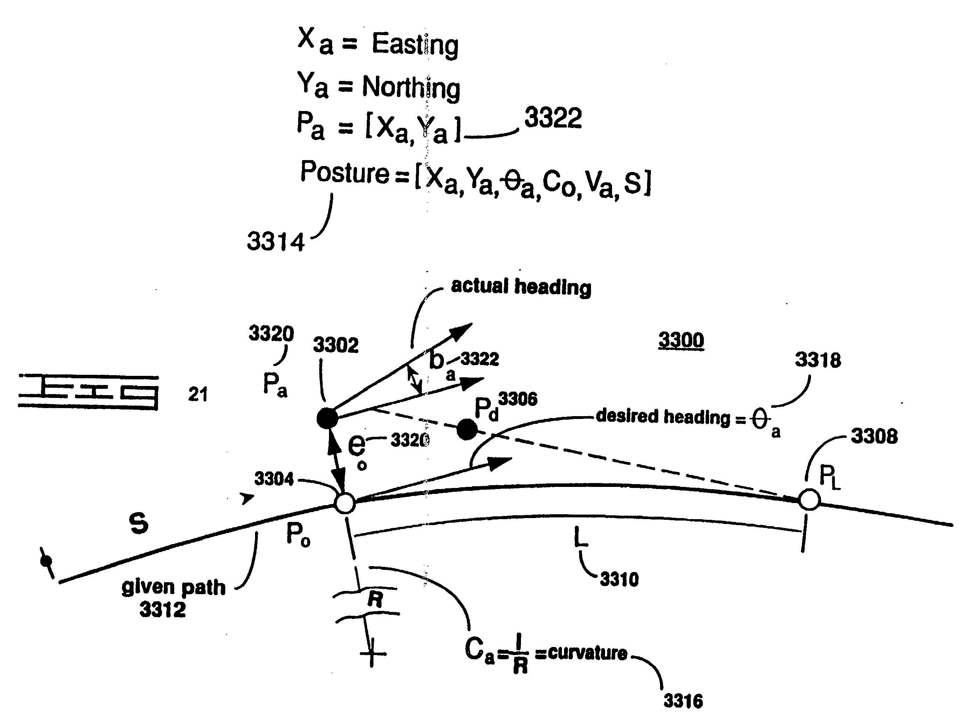

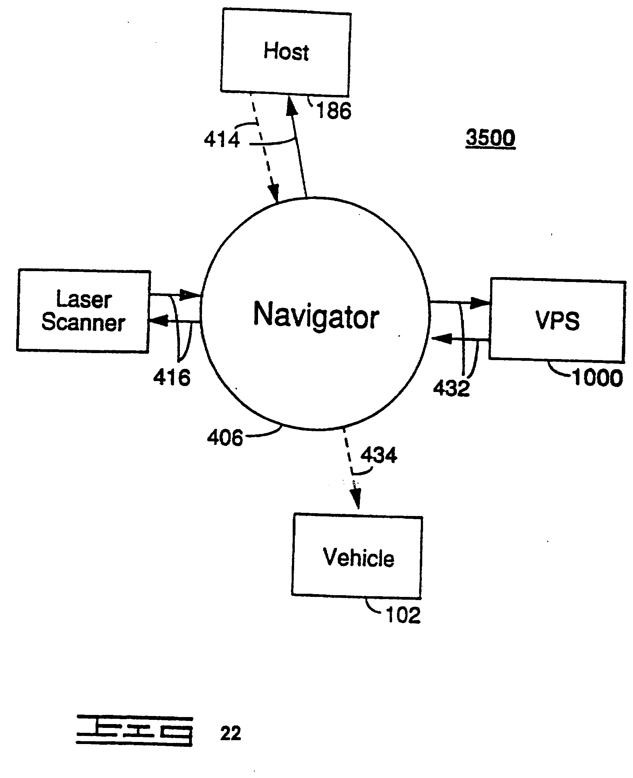

Figures 19 shows an example of B-spline curves.

2. ROUTE CREATION AND STORAGE

a. INTRODUCTION

In one embodiment of the present invention, in order to create routes for a site 300, data is first collected from the VPS 1000 and stored while a human drives the vehicle 102 over the road system of the work site 300. Nodes and segments are then fitted to the stored driven data, and organized into routes per the aforementioned procedure.

An application on an APOLLO Computer (now HEWLETT-PACKARD of Palo Alto, California) work station (a graphics display system, not shown) was developed to graphically fit route data to the stored driven data and to further define routes (that is, speeds, sequences, starting point, traversal direction). Any graphics work stations equivalent to the APOLLO could be used.

Once the routes for a site are defined, the route data is written to a permanent storage device. In one embodiment of the present invention, the storage device used is a bubble memory cartridge with an associated reader/writer. The bubble memory device is durable and retains the data when power is disconnected. The APOLLO application is capable of writing data to a cartridge and reading data from a cartridge.

As implied above, routes in the present invention may be predefined, or they may be generated dynamically.

In mining applications, generally a site 300 is surveyed and roads are pre-planned, carefully laid out and built. The routes used by the navigation system may then either be obtained from a manually created computer data base (created specifically to be used by the navigation system), or alternately, a vehicle may be physically driven over the actual routes on site to learn the routes as described above. In the learning method, several trips over a given route may be made. Then the variations in the data (due for instance to driver weaving) are averaged, and a smoothed-out best fit developed.

b. ROUTE DEFINITION

In one embodiment of the present invention, the following method is used for route definition.

Define the nodes and segments upon which the routes will be built. Place the node and segment data into an array called the "routeData" array. Each record in the array contains the following information:

1. Type of item (that is, node, linear segment, circular segment, end of route marker)
2. If node item, define the north and east coordinates of the node.
else if linear segment item, define the speed along the segment.
else if circular segment item, define the north and east coordinates of the center, the radius, the direction the circle is traversed (that is, clockwise, or counterclockwise), and the speed along the segment.
else if end of route marker, there is no other information.

2. Link the node and segment data together into sequences. The sequences are simply an array of indexes into the routeData array. Each sequence must begin with an end of route marker, followed by a node, then the remainder of the sequence alternate between segments and nodes until the sequence is terminated by another end of route marker. An example sequence would be,

1, 6, 3, 4, 7, 9, 10, 23, 78, 1

where the integers are indexes into the routeData array.

3. Finally define a route by specifying an index into the sequence array and whether to index through the sequence in the positive or negative direction. Place the index and index direction into an array called the "routeSpec" array. An item in the route spec array may look like the following:

6, 1      This specification defines a route which begins at node 6 and is indexed in the positive direction.

78, -1      This specification defines a route which begins at node 78 and is indexed in the negative direction.

A user simply tells the vehicle which item in the routeSpec array to use as a route.

4. The aforementioned data is stored onto the storage device in the order which it was defined in steps 1 - 3.

c. <u>NAVIGATOR ROUTE USAGE</u>

The following describes how the navigator 406 uses the defined routes from the above method of the present invention.

When the navigator 406 is powered on it reads the route information from the storage device 5302 and stores it in RAM in the syntax already presented.

Next the operator specifies a route for the vehicle 102 to follow. Again, the route is simply an index into the routespec array.

When the navigator 406 decides that all systems are ready for auto-operation, it sends a message to the vps_posture task telling it to engage.

The vps_posture task then determines the position, along the route which is closest to the vehicle 102's present position 2812. The search for the closest position 284 on the route proceeds as follows:

1. A pointer is set to the first segment in the route.

2. The perpendicular distance from the vehicle position to the segment is determined.

3. The pointer is moved to the next segment in the route.

4. The perpendicular distance from the vehicle position to the next segment is determined.

5. Repeat steps 3 and 4 until the end of route marker 2218 is reached.

6. Determine the distance from the vehicle position to the end points 2218 of the route.

7. Set a pointer to the route segment which had the closest distance and store the coordinates of the closest distance.

The vps_posture task then uses the description of the route (lines, arcs and speeds) to generate posture at one meter intervals. The task generates a predefined distance of postures plus a safety margin and puts the postures into a buffer 3000. To generate a posture which is one meter from a given posture the vps_posture task uses the following procedure:

1. Determine the type of segment from which the given posture was generated.

2. Use the proper formula for the type of segment to determine the change in north and east per meter of segment length.

3. Add the change in north and east per meter to the last given posture.

4. If the generated posture is beyond the end of the current segment, set a pointer to the next segment and repeat steps 2 and 3. else, return the generated posture.

The vps-posture task then informs the executive that it is ready for tracking.

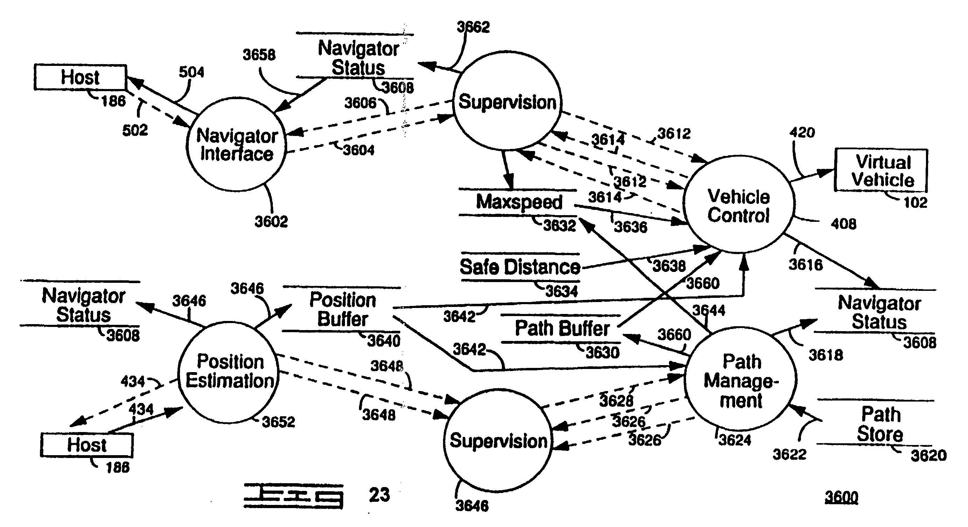

As the autonomous vehicle 102 moves along the posture in the buffer 3000, the safety margin 3006 is depleted. When the safety margin is below a specified amount, the vps_posture task generates another safety margin 3006 of postures and appends them to the current buffer 3000. The vps_posture task depletes the posture buffer 3000 by monitoring the current position 2812 of the vehicle 102 and moving a pointer 3002 in the buffer 3000 to the nearest posture. The posture buffer 3000 is constructed as a ring which is traversed in the clockwise direction (see Figure 20 , Posture Ring Buffer). That is, postures are placed in the ring such that the direction of vehicle travel corresponds to a clockwise traversal of the posture ring buffer 3000. Therefore, as the vehicle 102 moves the pointer 3002 to the nearest posture in the buffer 3000 will be moved in the clockwise direction. When the pointer 3002 will be moved in the clockwise direction, memory in the ring behind posture (counterclockwise of the pointer) is free to be over written.

Step 7 (in the search routine above) is registered until the end of route marker 2218 is reset at which time the vps_posture task ceases to generate posture and informs the executive that it has reached the end of the route.
As mentioned above, a path is as a series or sequence of contiguous "postures." A posture includes the speed and steering angle required to be on track. A posture may include latitude, longitude, heading, curvature (1/turning radius), maximum velocity and distance to next posture information.

### 3. POSTURE GENERATION

The tracking method of the present invention, requires certain information about the route it is tracking. The information is contained in a packet called a "posture" 3314. A single posture 3314 may contain position (that is, north and east coordinates), heading, and curvature data, for a specified location on the route. Therefore, a way of producing posture data from the route specification is required in accordance with the present invention.
Among the navigator tasks, (discussed below) is a task which reads the route information and produces postures at intervals (one meter for instance) along the route which are used by the tracking method. In one embodiment of the present invention, each posture requires 36 bytes of memory which translates to about 36k of memory for each kilometer of route. To reduce the memory requirements, the navigator buffers posture data.
The task which produces the postures reads the current position of the vehicle 102, finds the nearest point on the route to the current position, then generates a specified number of postures ahead of the vehicle 102. The number of postures generated is dependent on the maximum stopping distance of the vehicle 102. That is, there should always be enough postures in the buffer 3000 to guide the vehicle 102 to a stopping point.
In the B-spline approach to route definition according to the present invention however, the need for a posture buffer is eliminated, since the tracking method is able to directly produce posture information from the B-spline curve.

### C. PATH TRACKING

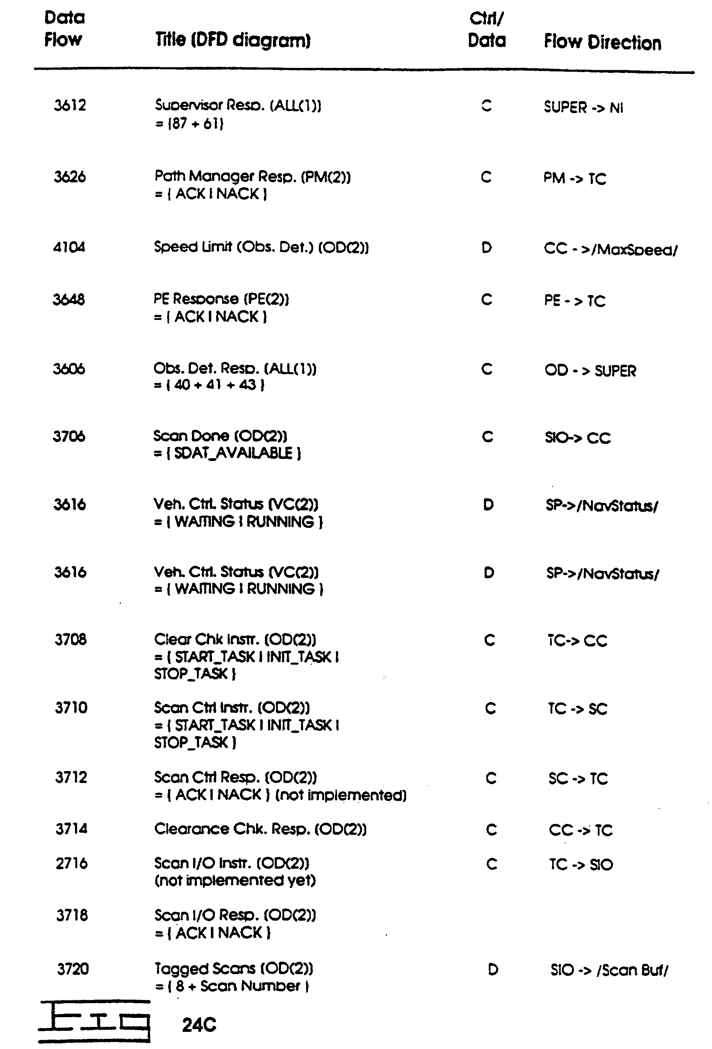

Path tracking or following is a critical aspect of vehicle navigation according to the present invention. The technique of the present invention uses position based navigation (rather than vision based navigation used in conventional navigation systems) to ensure that the correct autonomous vehicle path 3312 is followed. The present invention is also innovative in that it provides for separate control of steering angle and vehicle speed Figure 23 graphically illustrates the path tracking system of the present invention.
For an autonomous vehicle 102 according to the present invention to track specified paths, it is necessary to generate referenced inputs for the vehicle servo-controllers. Thus, path tracking can be considered as a problem of obtaining a referenced steering angle and a reference speed for the next time interval in order to get back to the referenced path ahead from the current deviated position.
In general terms, path tracking is determining the autonomous vehicle commands (speed, steer angle) required to follow a given path. Given a pre-specified steering angle, driven wheel velocity values and error components, the command steering and driving inputs are computed in the present invention.

### D. OBSTACLE HANDLING

### 1. INTRODUCTION

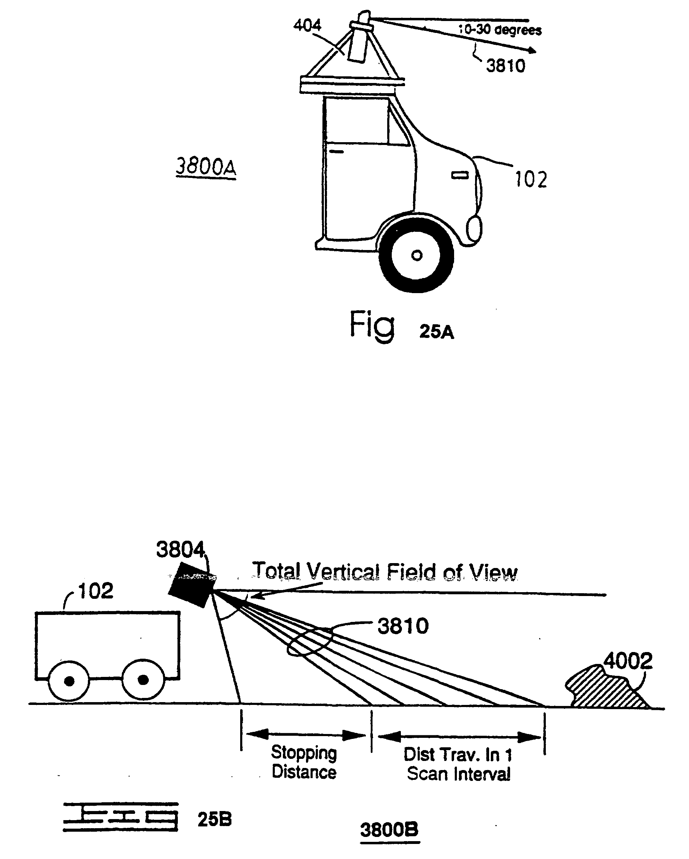

Obstacle handling involves at least three major functions: detection of obstacles 4002, avoidance of obstacles 4002, and returning to path 3312. The returning to path function is similar to path generation and tracking, as described above.
In addition to path tracking (following), successful navigation of vehicle 102 requires that vehicle 102 be able to detect obstacles 4002 in its path, thus allowing the vehicle to stop or otherwise avoid such an obstacle before a collision occurs.
In one embodiment of the present invention, a single line infra-red laser scanner 404 (See Figure 25) is used in a configuration where the scan is horizontal (not shown). The scan line 3810 does not contact the ground, so any discontinuities in the range data can be attributed to objects 4002 in the environment.
Since a reference path 3312 is available and the vehicle position is known relative to the reference path, only the range data and a region bounding the reference path 3312 is processed for threatening objects 4002. Objects outside of this region, or boundary zone, are ignored. The width of the boundary zone (not shown) is equal to the vehicle width plus some selected safety buffer to allow for tracking and positioning errors. This method is limited in its usefulness and is referred to as "clearance checking."

## 2. DETECTION OF OBSTACLES

In a simple case the laser 404 may be used in a single line scan mode with successive range measurements being made at regular angular intervals as the laser scans over the field of view. Again for simplicity, these scans can commence at regular time intervals. The term "clearance checking" has been used to describe this method. In this version the method has been limited to processing only two dimensional data.

This type of obstacle method is limited to checking to see if the path 3312 is clear using a single line scan mode with successive range measurements being made at regular angular intervals as the scanner 404 scans over the field of view. It does not include any methods to establish the existence of any obstacle 4002 or to create a path around it if the path is not clear. This type of method is not deemed to be a particularly useful obstacle detection method, except in very rigidly controlled environments, such as on a factory floor.

## 3. AVOIDANCE OF OBSTACLES

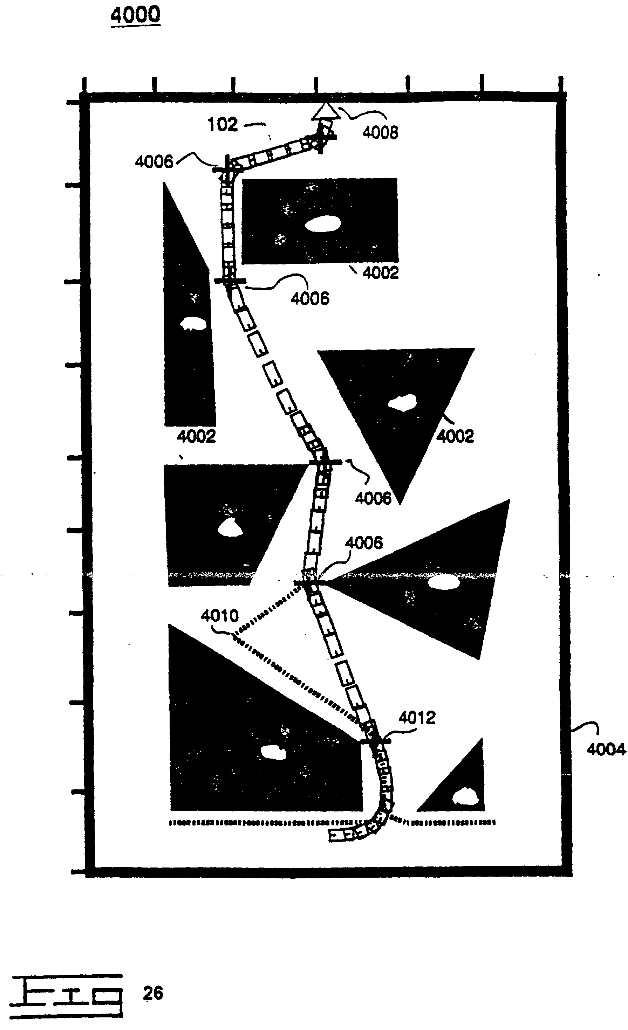

Once the present invention detects an obstacle 4002 in the path of the vehicle 102 (See Figure 26 ), it must then avoid a collision with the object. Certain assumptions are made concerning the obstacle avoidance problem:

1. The obstacle environment is populated with obstacles 4002 that can be represented by convex-polygons or convex lines;

2. The navigation methods only have access to the local environment information in the form of a local map representing all of the visible faces of the obstacle from the position of the vehicle 102, which can be obtained from unprocessed laser range data or from data processed through blob-extraction;

3. The vehicle 102 is a conventionally steered type which has constraints on its speed and acceleration and constraints on its steering angle and the rate of change in the steering angle.

To deal with the obstacle avoidance problem, the present invention divides it into two sub-problems.

First, to decide if any obstacles are in the way, and if so, which side should the vehicle pass on. Then select a sub-goal 4006, which will lead the vehicle 102 around the obstacle 4002, leading towards a higher level goal 4008, which is to get back on the desired path.

Second, once a sub-goal 4006 is selected, make a steering decision which drives the vehicle 102 towards the sub-goal 4006, while steering clear of the obstacle 4002. A sub-goal selection method and a steering decision method of the present invention solve these two sub-problems.

The above enumerated assumptions are managed in the following process:

The obstacle locations are obtained from the laser range scanner 3804 or 404. The range data generated by the scanner 3804 or 404 are processed to produce a list of polygonal faces, modeling the visible portions of the obstacle 4002 from the vehicle position. Each time new range data become available, a sub-goal selection method is executed to generate a sub-goal 4006 and determine regions of safe navigation (free-space 4010) for the steering decision method. The frequency at which the sub-goal selection method can be executed depends on the rate at which the scanner 3804 or 404 can collect data. The achievable vehicle speed, in turn, depends on this frequency of execution.

For the steering decision method, a higher sampling rate is desirable in order to produce a smooth path. Therefore, the steering decision method is executed more frequently than the sub-goal method.

The basic flow of the sub-goal method is the following:

```
1 save last initial-subgoal, subgoal, and free-space, set goal_blocked flag to true

2 if final goal is visible
        generate direct goal
        if direct goal is visible
                set goal_blocked flag to false

3 otherwise
        generate an initial subgoal
        set subgoal to initial subgoal
        recursively generate subgoals until the
        latest one is visible. if subgoal not
        feasible, abort

4 if goal_blocked flag is true
```

```
        restore old initial-subgoal, subgoal,
        and free_space


    5 otherwise
        generate free-space
        if free-space is not safe
            restore old initial-subgoal,
            subgoal, and free_space.
```

Sub-goal Method: First (step 1 above), the initial-subgoal, subgoal, and free-space generated from the previous iteration is saved. This assures that when the newly generated subgoal is not safe, the old subgoal can continue to be pursued.

Next (step 2 above), when the final goal is visible, attempt to generate a direct goal which is not associated with any obstacles 4002. Although the final goal is visible in the local map, it does not necessarily mean that no obstacle is blocking the final goal because obstacles outside the scanner range (both distance and angular wise) will not be represented in the local map. Therefore, when generating a direct goal, ensure that the goal is located in the cone area which is covered by the scanner 3804 or 404 to avoid placing a subgoal on or behind an obstacle 4002 that is not in the local map.

The next step (step 3 above) handles the situation where the final goal is blocked by an obstacle 4002 in the local map. In this case, the obstacle 4002 that blocks the line of sight to the final goal is first determined.

Given a flowchart blocking obstacle, there are two possible ways of going around it. If both edges of the obstacle are in the range of the scanner 3804 or 404, we may choose to go around the edge which gives the minimum sum of the distances from the vehicle 102 to edge and from the edge to the final distance. If only one edge of the obstacle 4002 is in the range, choose that edge to go around. If none of the edges is visible, always arbitrarily choose the left edged to go around. Once the edge to go around is determined, place the initial subgoal away from the edge at a distance that is proportional to the vehicle size.

Because of this displacement, the resulting subgoal may be blocked by other obstacles 4002. This calls for the recursive generation of subgoal on the obstacle, which blocks the line of sight to the subgoals just generated. This recursive process continues until a subgoal visible to the vehicle 102 is generated. Each subgoal so generated is checked for viability. By viability it is meant that the subgoal does not lead the vehicle 102 towards a gap between two obstacles 4002 which is too small for the vehicle to pass through. When such a condition is detected, the vehicle 102 will stop.

The direct subgoal generated in the second step (step 2 above) could possibly be obscured from the vehicle 102. If such is indeed the case, the old subgoals from the previous iteration is restored and used next (step 4 above).

In the final step (step 5 above), generate the free-space 4010 for the visible subgoal, which is a triangular region that contains no obstacles. Once the free-space 4010 is generated, the safeness of the subgoal and free-space 4010 can be determined. When the new subgoal and free-space 4010 is not safe, the old subgoal and free-space is again retained. Otherwise, the new subgoal and free-space is used.

The steering decision method of the present invention is composed of two major components:

transferring state constraints to control constraints; and determination of the desired control vector.

Once the control constraints and the desired control vector are computed, the control vectors can be determined using optimization techniques well known in the art.

## 4. RETURN TO PATH

The present invention includes a method, as shown diagrammatically in Figure 26 , whereby a safe path around a detected object 4002 will be plotted and navigated so that the vehicle 102 will reacquire the reference path after avoiding the object 4002.

## 5. SCANNER SYSTEM

Referring to Figure 25, the example system invention also includes a laser scanner system 404. The scanner 404 is used to find obstructions 4002 (See Figure 26) that randomly crop up in the vehicle 102 path, as previously discussed.

Sources of such obstructions 4002 may be varied and numerous depending on the particular work site. They may include fallen trees and branches, boulders, moving and parked vehicles, and people.

**EP 0 936 520 B1**

The scanner 404 gives the autonomous vehicle 102 the ability to detect and deal with the external world as conditions require.

**Claims**

1. A system for navigating (406) a vehicle (102) along a route (3312) comprising:

   means for storing route data representing a predetermined route;
   means for storing path data for each predetermined route;
   means for selecting a predetermined route for the vehicle (102) to traverse;
   means for retrieving route data representing a selected predetermined route;
   means for retrieving path data for retrieved route data;
   means for generating a path from retrieved path data;
   means (5306) for associating vehicle commands with a generated path;
   means (5306) for executing associated vehicle commands causing the vehicle to attempt to follow a generated path;
   means (5306) for periodically calculating errors in following a generated path;
   means (5306), responsive to calculated errors, for adjusting the execution of associated vehicle commands to reduce the calculated errors so that the vehicle tracks a generated path with a high degree of accuracy;
   means (4150) for detecting obstacles in the vehicle's direction of travel;
   means (4150) for avoiding collision with the obstacles, comprising means for stopping the vehicle to prevent a collision with the obstacles and means for generating a path around the obstacles;
   whereby an autonomous system (406) for safely and efficiently navigating a vehicle along a route is realised;
   **characterised in that**

   the means for generating a path, generates a posture contiguous path having rates of change of curvature dependant upon the steering constraints of the vehicle.

2. A method (406) of navigating a vehicle (102) along a route (3312) comprising the steps of:

   storing route data representing a predetermined route;
   selecting a predetermined route for the vehicle (102) to traverse;
   retrieving route data representing a selected predetermined route;
   retrieving path data for retrieved route data;
   generating a path from retrieved path data;
   associating (5306) vehicle commands with a generated path;
   executing (5306) associated vehicle commands causing the vehicle to attempt to follow a generated path;
   periodically calculating (5306) errors in following a generated path;
   adjusting (5306), responsive to calculated errors, the execution of associated vehicle commands to reduce the calculated errors so that the vehicle tracks a generated path with a high degree of accuracy;
   detecting (4150) collision with the obstacles (4002) by stopping the vehicle to prevent a collision with the obstacles (4002), generating a path around the obstacles (4002), or performing both; whereby an autonomous method (406) of safely and efficiently navigating a vehicle (102) along a route is realised; **characterised in that** the generated path is a posture contiguous path having rates of change of curvature dependant upon the steering constraints of the vehicle.

3. A method (406) of navigating a vehicle (102) along a route (3312) according to claim 2, wherein the step (5306) of periodically calculating errors in following a generated path comprises: determining the vehicle's actual position (3210,3212,3218); determining the vehicle's desired position (3204); and comparing the actual (3210, 3212, 3218) with the desired position (3204); thereby calculating the errors in following the generated path.

4. A method (406) of navigating a vehicle (102) along a route (3312) according to claim 2, wherein the step (5306) of adjusting, responsive to calculated errors, the execution of associated vehicle commands to reduce the calculated errors so that the vehicle commands to reduce the calculated errors so that the vehicle tracks a generated path with a high degree of accuracy comprises dynamically determining a correcting steering angle so that the correcting steering angle causes the vehicle (102) to steer from an actual position (3210, 3212, 3218) to a desired position (3204).

**EP 0 936 520 B1**

**Patentansprüche**

1. System für das Navigieren (406) eines Fahrzeugs (102) entlang einer Route (3312), das folgendes aufweist:

   Mittel für das Speichern von Routendaten, die eine vorbestimmte Route repräsentieren;
   Mittel für das Speichern von Pfaddaten für eine jede vorbestimmte Route;
   Mittel für das Auswählen einer vorbestimmten Route, der das Fahrzeug (102) folgt;
   Mittel für das Herausziehen von Routendaten, die eine ausgewählte vorbestimmte Route repräsentieren;
   Mittel für das Herausziehen von Pfaddaten für die herausgezogenen Routendaten;
   Mittel für das Erzeugen eines Pfades aus den herausgezogenen Pfaddaten;
   Mittel (5306) für das Assoziieren bzw. Zuordnen von Fahrzeugbefehlen mit bzw. zu einem erzeugten Pfad;
   Mittel (5306) für das Ausführen der zugeordneten Fahrzeugbefehle, die bewirken, dass das Fahrzeug einem erzeugten Pfad zu folgen versucht;
   Mittel (5306) für das periodische Berechnen von Fehlern beim Folgen eines erzeugten Pfades;
   Mittel (5306), und zwar ansprechend auf die berechneten Fehler, für das Angleichen bzw. Einstellender Ausführung der zugeordneten Fahrzeugbefehle für das Reduzieren der berechneten Fehler, so dass das Fahrzeug einem erzeugten Pfad mit einem höheren Genauigkeitsgrad folgt;
   Mittel (4150) für das Detektieren von Hindernissen in der Fortbewegungsrichtung des Fahrzeugs;
   Mittel (415Q) für das Vermeiden einer Kollision mit den Hindernissen, die wiederum Mittel aufweisen für das Anhalten des Fahrzeugs zum Verhindern einer Kollision mit den Hindernissen und Mittel für das Erzeugen eines Pfades um die Hindernisse herum;

   wobei ein autonomes bzw. selbständiges System (406) für das sichere und effiziente Navigieren eines Fahrzeugs entlang einer Route realisiert wird; **dadurch gekennzeichnet, dass**
   die Mittel für das Erzeugen eines Pfades einen Pfad von aneinander hängenden Anordnungen bzw. Positionierungen erzeugt mit Änderungsraten für die Krümmung abhängig von den Lenkeinschränkungen des Fahrzeugs.

2. Verfahren (406) für das Navigieren eines Fahrzeugs (102) entlang einer Route (3312), das die folgenden Schritte aufweist:

   Speichern von Routendaten, die eine vorbestimmte Route repräsentieren;
   Auswählen einer vorbestimmten Route, der das Fahrzeug (102) folgt;
   Herausziehen der Routendaten, die eine ausgewählte vorbestimmte Route repräsentieren;
   Herausziehen von Pfaddaten für die herausgezogenen Routendaten;
   Erzeugen eines Pfades aus den herausgezogenen Pfaddaten;
   Zuordnen bzw. Assoziieren (5306) von Fahrzeugbefehlen zu bzw. mit einem erzeugten Pfad;
   Ausführen (5306) der zugeordneten Fahrzeugbefehle, die bewirken, dass das Fahrzeug einem erzeugten Pfad zu folgen versucht;
   Periodisches Berechnen (5306) von Fehlern beim Folgen eines erzeugten Pfades;
   Angleichen bzw. Einstellen (5306), und zwar ansprechend auf die berechneten Fehler, der Ausführung der zugeordneten Fahrzeugbefehle zum Reduzieren der berechneten Fehler, so dass das Fahrzeug einem erzeugten Pfad mit einem hohen Genauigkeitsgrad folgt;
   Detektieren (4150) einer Kollision mit den Hindernissen (4002) durch Stoppen des Fahrzeugs, um eine Kollision mit den Hindernissen (4002) zu verhindern, Erzeugen eines Pfades um die Hindernisse (4002) herum oder Durchführen von beidem; wobei ein autonomes Verfahren (406) für ein sicheres und effizientes Navigieren eines Fahrzeugs (102) entlang einer Route realisiert wird;

   **gekennzeichnet dadurch, dass**

   der erzeugte Pfad ein Pfad von aneinander gehängten Anordnungen bzw. Positionierungen mit einer Änderungsrate der Krümmung abhängig von den Lenkeinschränkungen des Fahrzeugs ist.

3. Verfahren (406) für das Navigieren eines Fahrzeugs (102) entlang einer Route (3312) gemäß Anspruch 2, wobei der Schritt (5306) des periodischen Berechnens von Fehlern beim Folgen eines erzeugten Pfades folgendes aufweist:

   Bestimmen der Fahrzeug-Ist-Position (3210, 3212, 3218); Bestimmen der Fahrzeug-Soll-Position (3204); und Vergleichen der Ist- (3210, 3212, 3218) mit der Soll-Position (3204) um so die Fehler beim Folgen des erzeugten Pfades zu berechnen.

**4.** Verfahren (406) für das Navigieren eines Fahrzeugs (102) entlang einer Route (3312) gemäß Anspruch 2, wobei der Schritt (5306) des Einstellens ansprechend auf die berechneten Fehler für die Durchführung der zugeordneten Fahrzeugbefehle zum Reduzieren der berechneten Fehler, und zwar so dass die Fahrzeugbefehle die berechneten Fehler reduzieren, so dass das Fahrzeug einem erzeugten Pfad mit einem höheren Genauigkeitsgrad folgt, das dynamische Bestimmen eines korrigierenden Lenkwinkels aufweist, so dass der korrigierende Lenkwinkel bewirkt, dass das Fahrzeug (102) von einer IstPosition (3210, 3212, 3218) zu einer Soll-Position (3204) lenkt.

## Revendications

**1.** Système pour faire naviguer (406) un véhicule (102) le long d'une route (3312) comprenant :

des moyens pour mémoriser des données de route représentant une route prédéterminée ;
des moyens pour mémoriser des données de trajectoire pour chaque route prédéterminée ;
des moyens pour sélectionner une route prédéterminée que le véhicule (102) doit parcourir ;
des moyens pour récupérer des données de route représentant une route prédéterminée choisie ;
des moyens pour retrouver des données de trajectoire pour les données de route récupérées ;
des moyens pour produire une trajectoire à partir des données de trajectoire récupérées ;
des moyens (5306) pour associer des ordres du véhicule à une trajectoire produite ;
des moyens (5306) pour exécuter des ordres de véhicule associés amenant le véhicule à tenter de suivre une trajectoire produite ;
des moyens (5306) pour calculer périodiquement des erreurs dans le suivi d'une trajectoire produite ;
des moyens (5306), agissant en réponse à des erreurs calculées, pour ajuster l'exécution des ordres de véhicule associés pour réduire les erreurs calculées de sorte que le véhicule suit une trajectoire produite avec un niveau de précision élevée ;
des moyens (4150) pour détecter des obstacles dans la direction de déplacement du véhicule ;
des moyens (4150) pour éviter une collision avec les obstacles, comprenant des moyens pour arrêter le véhicule pour empêcher une collision avec les obstacles et des moyens pour produire une trajectoire autour des obstacles ;
d'où il résulte qu'un système autonome (406) pour faire naviguer de façon sûre et efficace un véhicule le long d'une route est réalisé ;

**caractérisé en ce que** les moyens pour produire une trajectoire produisent une trajectoire contiguë de posture ayant des taux de changement de courbure qui dépendent des contraintes de direction du véhicule.

**2.** Procédé (406) pour faire naviguer un véhicule (102) le long d'une route (3312) comprenant les étapes suivantes :

mémoriser les données de route représentant une route prédéterminée ;
sélectionner une route prédéterminée que le véhicule (102) doit parcourir ;
récupérer des données de route représentant une route prédéterminée choisie ;
récupérer des données de trajectoires pour les données de route retrouvées ;
produire une trajectoire à partir des données de trajectoire récupérées ;
associer (5306) des ordres de véhicule à une trajectoire produite ;
exécuter (5306) des ordres de véhicule associés, pour amener le véhicule à tenter de suivre une trajectoire produite ;
calculer (5306) périodiquement des erreurs dans le suivi d'une trajectoire produite ;
ajuster (5306), en réponse aux erreurs calculées, l'exécution des ordres de véhicule associés pour réduire les erreurs calculées de sorte que le véhicule suive une trajectoire produite avec un haut degré de précision ;
détecter (4150) une collision avec des obstacles (4002) en arrêtant le véhicule pour empêcher une collision avec les obstacles (4002), produire une trajectoire autour des obstacles (4002), ou faire les deux ; d'où il résulte qu'un procédé autonome (406) de navigation sûre et efficace d'un véhicule (102) le long d'une route est réalisé ;

**caractérisé en ce que** la trajectoire produite est une trajectoire à posture contiguë ayant des taux de changement de courbure qui dépendent des contraintes de direction du véhicule.

3. Procédé (406) pour faire naviguer un véhicule (102) le long d'une route (3312) selon la revendication 2, dans lequel l'étape (5306) de calcul périodique d'erreur dans le suivi d'une trajectoire produite comprend : déterminer la position réelle du véhicule (3210, 3212, 3218) ; déterminer la position désirée du véhicule (3204) ; et comparer la position réelle (3210, 3212, 3218) et la position désirée (3204) ; pour calculer ainsi les erreurs de suivi de la trajectoire produite.

4. Procédé (406) pour faire naviguer un véhicule (102) le long d'une route (3312) selon la revendication 2, dans lequel l'étape (5306) d'ajustement, en réponse à des erreurs calculées, de l'exécution des ordres de véhicule associés pour réduire les erreurs calculées de sorte que les ordres de véhicule réduisent les erreurs calculées de sorte que le véhicule suive une trajectoire produite avec un haut degré de précision comprend la détermination dynamique d'un angle de direction de correction de sorte que l'angle de direction de correction amène le véhicule (102) à se diriger d'une position réelle (3210, 3212, 3218) à une position désirée (3204).

105 ⌐

PSEUDOLITE(S)    GPS SATELLITES

⌐ 104

192    107    110

VEHICLE

VEHICLE POSITIONING SYSTEM (VPS)

MOTION POSITIONING SYSTEM (MPS)

GPS
PROCESSING
SYSTEM

VEHICLE
ODOMETER    902

904

INERTIAL
REFERENCE
UNIT (IRU)

⌐ 700

MPS INTER
COMMUNICATIONS
PROCESSOR

GYROS    106

108

190

906

ACCELEROMETERS

900

112    114

194

VPS
PROCESSING
SYSTEM    116

1000

118

HOST
PROCESSING
SYSTEM

NAVIGATION
SYSTEM

196    1022

186

100

102

BASE STATION    188

FIG 1

100A

Fig IA

FIG 2

$$(X_0 - U_x)^2 + (Y_0 - U_y)^2 + (Z_0 - U_z)^2 = (R_0 - C_b)^2$$

$$(X_2 - U_x)^2 + (Y_2 - U_y)^2 + (Z_2 - U_z)^2 = (R_2 - C_b)^2$$

$$(X_4 - U_x)^2 + (Y_4 - U_y)^2 + (Z_4 - U_z)^2 = (R_4 - C_b)^2$$

$$(X_6 - U_x)^2 + (Y_6 - U_y)^2 + (Z_6 - U_z)^2 = (R_6 - C_b)^2$$

$$\text{Vehicle 102 Latitude} = \theta = \text{COS}^{-1} \sqrt{\frac{(U_x^2 + U_y)^2}{|\bar{u}|}}$$

$$\text{Vehicle 102 Longitude} = \beta = \text{TAN}^{-1} \ U_x/U_y$$

212

# FIG 3

## Autonomous Work Site

EP 0 936 520 B1

EP 0 936 520 B1

**186**
Host
Processing
System

**406**

**400**

**314**
Base
Station

**1000**

**414**

Navigator

**432**

**430**

Vehicle
Position
System

**416**

**190**

**434**

**436**

**110**

**404**
Laser
Scanner

**408**

Satellites
(GPS)

**200-206**

Vehicle
Controls

**424**

FIG 4

**418**

**420**

Health
Monitor

**412**

Tele-Los
Panel

**422**

**410**

Vehicle

**102**

EP 0 936 520 B1

FIG 5

200
202
204
206
105
600
316
618
620
622
312
102
Vehicle
188
Base Station

FIG 6

GPS Antenna

702

Pre Amp | 704

700

GPS Receiver | 706

GPS Inter Communications Processor | 708

GPS Console 1 | 712

GPS Processor | 710

GPS Console 2 | 722

716

GPS Communications Interface Processor | 720

Data Radio | 714

GPS Data Collection Device | 718

FIG 7

714 — Data Radio

GPS Receiver

800

706

GPS Communications
Interface Processor

720

GPS Data
Collection Device

718

IPROTO Function

804

ICC Function

812

Communications
Manager
Function

808

Raw GPS
Data Output
Function

814

Request &
Decode GPS
Data

806

708

Decode Radio
Link Data

810

Control
File
(Priori)

GPS Kalman
Filter

802

820

710

FIG 8

Console
Function

816

VPS
Communications
Function

818

716

GPS Console 2

722

VPS System

1000

900

Odometer    IRU
902    904

MPS Inter
Communications
Processor
906

908    910

Odometer
Signal

IRU
Signal

To Vps
Main Processor
1002

FIG 9

GPS
Processing
System
700

MPS
Processing
System
900

1018

716

908

910

VPS Main
Processor
1002

Velocity
Data and
Position
Data

1008

VPS I/O
Processor
1004

1016

1000

VPS
Communications
Interface Processor
1020

To Navigation
Sytem 1022

VPS Data
Collector
1014

VPS
Console
1012

FIG 10

FIG 11

Antenna 702
Pre-amp 704
GPS Receiver 706

700

GPS Processing System

GPS Console 1 712
GPS Inter Communications Processor 708

GPS Console 2 722
GPS Processor 710

716

Data Radio 714
720

GPS Data Collection Device 718

MPS 900

Odometer 902
IRU 904

MPS Inter Communications Processor 906

VPS Main Processor 1002

1008

1100

VPS I/O Processor 1004

1016

VPS Communications Interface Processor 1020

To Navigation System 1022

VPS Data Collection Device 1014

VPS Console 1012

2200

Segment5 = END OF ROUTE
2218

node6 2222

2210

node4

node5

2212

segment3
2214

2216

2220

segment2
2224

2208

2206

Sequence 1 = segment5, node 1, segment1, node2,
segment4, node6, segment5

node2

Sequence 2 = segment5, node 1, segment1, node2,
segment2, node4, segment3, node 5, segment5

Route 1 = sequence 1, start at node6, traverse in
the positive direction

Route 2 = sequence 1, start at node6, traverse in
the negative direction

segment1
2224

Route 3 = sequence 2, start at node1, traverse in
the positive direction

ROUTE DEFINITIONS

FIG 12

2202

node1

2312

2304 $X_{J+1}$

2306 $X_J$

2308 $X_{J-1}$

2310

2302 $X_{J+2}$

$X_{J-2}$

2316

2314

FIG. 13

2300

(O) : acceptable

(x) : not acceptable

**2400**

**Fig** 14

**2500**

(O) : acceptable

(x) : not acceptable

2502 P$_f$  2512 (O)  2516  
2514 (X)  P$^i$ 2504

(X)  2510  2508  
2506 P$_f$  (O)  P$_i$

**FIG 15**

2600

2602

Fig. 16

**2700**

guess $S_1$, $S_2$ — 2702

fix $S_2$ and perturb $S_1$ 5 times — 2704

for each $S_1$, $S_2$ compute $x_c$, $Y_c$ — 2706

find new $S_1$ to minimize distance $(X_c, Y_c) - (X_f, Y_f)$ — 2708

fix $S_1$ and perturb $S_2$ 5 times — 2710

for each $S_1$, $S_2$ compute $x_c$, $Y_c$ — 2712

find new $S_2$ to minimize distance $(X_c, Y_c) - (X_f, Y_f)$ — 2714

distance $(X_c, Y_c) - (X_f, Y_f)$ within bound — 2716

No

yes

end — 2718

FIG 17

$(K_{m+1}, S_{m+1})$

$(K_{m+2}, S_{m+2})$

$(K_{m+3}, S_{m+3})$

$P_m$

2802

$P_{desired}$

2804

$P_{m+1}$

2806

$P_{m+2}$

2808

$P_{m+3}$

2810

2814

2816

2812

$P_{actual}$

$(K^*_{m+2}, S^*_{m+2})$

$(U^*_{m+1}, S^*_{m+1})$

**2800**

FIG 18

2900

FIG 19

Current Posture Pointer

⌐3002

Direction of
Pointer
Movement
(Vehicle Movement)

Specified Postures
(Used Postures)

Open Buffer Space
(Used Postures)

⌐ 3008.

3004⌐

Where Newly
Generated
Postures are
Placed

⌐ 3010

Safety Margin Postures

⌐ 3006

⌐3000

<u>3000</u>

20

EP 0 936 520 B1

$X_a$ = Easting

$Y_a$ = Northing

$P_a = [X_a, Y_a]$——3322

Posture = $[X_a, Y_a, \theta_a, C_o, V_a, S]$

3314

**actual heading**

3320  3302  $P_a$

$b_a$ 3322

3300

3318

$P_d$ 3306

desired heading = $\theta_a$

3308

$e_o$ 3320

$P_L$

3304

$P_o$

3316

S

L

given path 3312

$R$

3310

$C_a = \frac{1}{R}$ = curvature

3316

FIG 21

3500

FIG 22

FIG. 23

# Navigator Data Flow Summary

The purpose of this summary is to list all of the data flows defined in the Navigator Architecture. Where the flow is defined, whether it is control or data, how it is used and what it is made up of is listed in this summary. A list of abreviations used in this list is included at the end of the list.

| Data Flow | Title (DFD diagram) | Ctrl/ Data | Flow Direction |
|---|---|---|---|
| 502 | Host Cmds and Queries (NI(2)) = {follow path n I set scan speed I set speed limit I start tracking I restart tracking I shutdown} | C | Host - > NI |
| 504 | Replies to Host (NI(2)) = {navigator status summary I VPS Packet I Exception Condition n I ACK I Nack I invalid command/query } | D | NI - > Host |
| 3604 | Supervisor Instr. (NI(2)) = {FOLLOW_PATH n I SPEED_LIMIT I START_TRACKING I RESTART_TRACKING ISHUTDOWN} | C | NI - >TC |
| 3658 | Navigator Status (NI(2)) = {21 + 37 + 69 + 71 + 84} | D | /Nav Status/ - > NI |
| 432 | Position Data (Context (0)) = {VPS packet} | D | VPS - > PE |
| 3702 | CK Status (OD(2)) = {RUNNING I WAINTING I SLOW I STOP} | C | CC - >/NavStatus/ |
| 3704 | Obs. det. Instr. (ALL(1)) = {38 + 39 + 42} | C | SUPER - > OD |
| 416 | Scanner Data (CONTEXT(0)) | D | Scanner - > SIO |
| 3638 | Safe_Dis (OD(2)) | D | CC - > /Safe_Dis/ - > SP |
| 3636 | Min (MaxSpeeds) (VC (2)) = min { 18 & 25 & 29 } (not implemented) | D | /MaxSpeed/ - > SP |
| 3628 | Path Man Inst. (PM (2)) { INIT_TASK I START_TASK I STOP -TASK } | C | TC - > PM |

FIG 24A

| Data Flow | Title (DFD diagram) | Ctrl/ Data | Flow Direction |
|---|---|---|---|
| 3614 | Vehicle Control (VC(2)) = ( ACK I NACK ) | C | SP - > TC |
| 3612 | Veh. Ctrl. Instr. (VC(2)) = ( INIT_TASK I START_TASK I stop _TASK I STOP_VEH ) | C | TC - > SP |
| 3650 | Position Est. Instr. (PE(2)) = (INIT-TASK I START_TASK I STOP_TASK ) | C | TC - > PE |
| 3660 | Vehicle Path (PM(2)) = ( n Path Postures ) | D | PM - >/Path Buf/ |
| 3612 | Exception Veh. Cmd (VC(2)) = ( STOP_VEH ) | C | EC - > SP |
| 3644 | Speed Limit (Path Manager) (PM(2)) | D | PM - >/MaxSpeed/ |
| 432 | VPS Control (PE(2)) (not implemented) | C | PE - > VPS |
| 416 | Scanner Ctrl (OD(2)) = (Scanner Motor Amp Instructions) (not implemented) | C | SC - > Scanner |
| 4102 | Obs det Status (ALL(1)) = (6+85+86) | D | OD - >/NavStatus/ |
| 420 | Vehicle Commands (VC(2)) | C | SP - > Vehicle |
| 3622 | Path Data (PM(2)) = ( n Path Postures) | D | /Path Store/ - > PM |
| 3642 | Valid VPS Packet (PE(2)) = (VPS data) | D | PE - > /Pos Buff/ |
| 3654 | Speed Limit (Task Ctrl) (TC(2)) | D | TC - > /MaxSpeed/ |

FIG 24B

| Data Flow | Title (DFD diagram) | Ctrl/ Data | Flow Direction |
|---|---|---|---|
| 3612 | Supervisor Resp. (ALL(1)) = (87 + 61) | C | SUPER -> NI |
| 3626 | Path Manager Resp. (PM(2)) = { ACK I NACK } | C | PM -> TC |
| 4104 | Speed Limit (Obs. Det.) (OD(2)) | D | CC - >/MaxSpeed/ |
| 3648 | PE Response (PE(2)) = { ACK I NACK } | C | PE - > TC |
| 3606 | Obs. Det. Resp. (ALL(1)) = { 40 + 41 + 43 } | C | OD - > SUPER |
| 3706 | Scan Done (OD(2)) = { SDAT_AVAILABLE } | C | SIO-> CC |
| 3616 | Veh. Ctrl. Status (VC(2)) = { WAITING I RUNNING } | D | SP->/NavStatus/ |
| 3616 | Veh. Ctrl. Status (VC(2)) = { WAITING I RUNNING } | D | SP->/NavStatus/ |
| 3708 | Clear Chk Instr. (OD(2)) = { START_TASK I INIT_TASK I STOP_TASK } | C | TC-> CC |
| 3710 | Scan Ctrl Instr. (OD(2)) = { START_TASK I INIT_TASK I STOP_TASK } | C | TC -> SC |
| 3712 | Scan Ctrl Resp. (OD(2)) = { ACK I NACK } (not implemented) | C | SC -> TC |
| 3714 | Clearance Chk. Resp. (OD(2)) | C | CC -> TC |
| 2716 | Scan I/O Instr. (OD(2)) (not implemented yet) | C | TC -> SIO |
| 3718 | Scan I/O Resp. (OD(2)) = { ACK I NACK } | | |
| 3720 | Tagged Scans (OD(2)) = { 8 + Scan Number } | D | SIO -> /Scan Buf/ |

**FIG 24C**

| Data Flow | Title (DFD diagram) | Ctrl/ Data | Flow Direction |
|---|---|---|---|
| 3614 | Tracking Exception (VC(2)) = {VEH_OFF_PATH I PARAM_OO_BOUNDS i PDAT_NEXIST I SDAT_NEXIST I PBUF_EMPTY I PBUFF_INSUFFICIENT I VEH_TOO_FAST I TRACK_HEAD_ERR I VEH_NOT_CONN I VPS_NOT_READY I VPS_NOT_REC I SKIPPED_SCAN I PBUF_EMPTY} | C | SP - > EC |
| 3722 | Collision Avoid. Except. (OD(2)) = {BAD_ANGLE I PDAT_NEXIST I SDAT_NEXIST I PBUFF_INSUFFICIENT I VEH_OFF_PATH I VEH_TOO_FAST I TRACK_HEAD_ERR} | C | CC - > EC |
| 3724 | Obstacle Det Except (ALL(1)) = {52+56+57} | C | OD - > SUPER |
| 3726 | Scan Ctrl Except (OD(2)) = {LASER_FAULT} (not implemented) | C | SC - > EC |
| 3728 | Scan I/O Exception (OD(2)) = {LASER_FAULT} | C | SIO - > EC |
| 3730 | Exceptions (EC(2)) = {51+52+53+57+127+130} | C | EC - > NI |
| 3732 | PE Status (PE(2)) = {WAITING I RUNNING} | D | PE - >/NavStatus/ |
| 3618 | PM Status (PM(2)) = {WAITING I RUNNING} | D | PM - >/NavStatus/ |
| 3662 | Supervisor Status (TC(2)) = {WAITING I RUNNING} | D | TC - >/NavStatus/ |
| 3734 | Scan I/O Status (OD(2)) = {WAITING I RUNNING} | D | SIO - >/NavStatus/ |
| 3736 | Scan Ctrl Status (OD(2)) = {WAITING I RUNNING} | D | SC - >/NavStatus/ |
| 3732 | Supervisor Status (TC(2)) = {ACK I NACK} | C | TC - >NI |
| 3636 | PM Exception (PM(2)) | C | PM - >EC |

$$\boxed{\text{F I G}}$$ 24D

404

10-30 degrees

3810

3800A

102

Fig 25A

3804

Total Vertical Field of View

102

3810

4002

Stopping
Distance

Dist Trav. In 1
Scan Interval

FIG 25B

3800B

4000

FIG 26